(19) Europäisches Patentamt
European Patent Office
Office européen des brevets

(11) **EP 4 741 869 A1**

(12) **EUROPEAN PATENT APPLICATION**

(43) Date of publication:
**13.05.2026 Bulletin 2026/20**

(21) Application number: **24211825.5**

(22) Date of filing: **08.11.2024**

(51) International Patent Classification (IPC):
*G01S 7/00* (2006.01)   *G01S 7/292* (2006.01)
*G01S 13/00* (2006.01)   *G01S 13/22* (2006.01)
*G01S 13/30* (2006.01)   *G01S 13/87* (2006.01)
*H04W 36/08* (2009.01)   *H04W 72/542* (2023.01)

(52) Cooperative Patent Classification (CPC):
**G01S 7/006; G01S 7/2923; G01S 13/003;
G01S 13/225; G01S 13/30; G01S 13/878;
H04W 36/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Vestel Elektronik Sanayi ve Ticaret
A.S.**
**45030 Manisa (TR)**

(72) Inventors:
• **AL-OLAIMAT, Ayat**
  **34810 Istanbul (TR)**
• **RAFIQUE, Saira**
  **34810 Istanbul (TR)**
• **ARSLAN, Hüseyin**
  **34810 Istanbul (TR)**

(74) Representative: **Grünecker Patent- und
Rechtsanwälte
PartG mbB
Leopoldstraße 4
80802 München (DE)**

(54) **A NOVEL SENSING-MODE HANDOFF MECHANISM FOR HIGH-RESOLUTION AND ACCURATE SENSING IN B5G NETWORKS**

(57) Techniques and methods are described to perform hand-over from a first object sensing device to a second object sensing device. The handover is a handover from mono-static sensing to bi-static sensing or a handover from bi-static sensing to mono-static sensing. A first pulse train and a second pulse train are transmitted within a pulse repetition interval, with the second pulse train being transmitted after the transmitting of the first pulse train. A presence and/or a location of a first reception signal and/or of a second reception signal are detected within the pulse repetition interval. The first and the second reception signal respectively correspond to reflections of the transmitted first and second pulse train. According to the detected presence and/or location of the second reception signal, it is determined whether the handover is to be performed.

FIG. 5

EP 4 741 869 A1

## Description

The present disclosure relates generally to wireless sensing and communication, and in particular to joint communication and sensing (JCAS).

## BACKGROUND

The emergence of the fifth generation (5G) of mobile communication marked a significant change in wireless networks, shifting focus towards supporting diverse services with varying performance needs rather than solely emphasizing data rate improvements. This shift introduced services like enhanced mobile broadband (eMBB), massive machine-type communication (mMTC), and ultra-reliable low-latency communication (uRLLC) to accommodate numerous devices and critical applications. The upcoming sixth generation (6G) cellular standards aim to build upon these capabilities by enabling joint communication and sensing (JCAS), facilitating a human-centered digital society across various sectors, such as work, healthcare, education, industry, entertainment, banking, and transportation, where communication is a crucial aspect. Given the diverse applications envisioned for next-generation networks, it is evident that wireless systems may not only handle communication, but may also utilize sensing techniques to gather information about the environment and users, improving overall network performance.

5G and beyond wireless networks call for an increasing need for connectivity due to the growing requirements in both communication applications and sensing services. This has led to increased research efforts to study multiple distributed systems, including their network perspectives. On the other hand, joint communication and sensing (JCAS) systems promise to improve the efficiency of spectral and hardware resources, enabling a wide range of applications such as autonomous vehicles, smart transportation systems, connected vehicles, virtual reality (VR) and extended reality (XR) in 6G networks. It is noted that the term JCAS is only one of terms referencing various projects or proposals that aim at combining communication and sensing functionalities within the same infrastructure or signal design. Some other terms include but are not limited to ISAC (Integrated Sensing and Communication), JSC (Joint Sensing and Communication), Dual-functional Radar and Communication (DFRC), and Coexistent Sensing and Communication. For example, 3rd Generation Partnership Project (3GPP) as well as European Telecommunications Standards Institute (ETSI) have tended to employ the term ISAC. The present disclosure employs there terms interchangeably to denote the effort in integrating communication and sensing functionality into one system.

Moreover, it is essential to investigate the use of cell-free massive multiple-input multiple-output (MIMO) cellular systems for the provision of JCAS capabilities, primarily in use cases such as vehicle-to-everything (V2X) networks for autonomous vehicles and smart city monitoring, considering the level of centralization of the core network to ensure communication reliability and to satisfy sensing detection and resolution.

## SUMMARY

Methods and techniques are described herein for facilitating joint communication and sensing. For that purpose, the present disclosure provides methods and techniques to handle handover between sensing devices that sense object(s) in static and dynamic scenarios, so as to enable a robust and stable JCAS.

The invention is defined by the independent claims. Some exemplary implementations are provided by the dependent claims.

For example, a method for hand-over from a first object sensing device to a second object sensing device is provided comprising steps performed at the first object sensing device of: transmitting a first pulse train within a pulse repetition interval; transmitting a second pulse train within the pulse repetition interval after a predefined time interval of the transmitting of the first pulse train; detecting presence and/or location of a first reception signal and/or a second reception signal within the pulse repetition interval, wherein the first reception signal and the second reception signal respectively correspond to reflections of the transmitted first pulse train and the second pulse train; and determining whether a handover is to be performed according to the detected presence and/or location of the second reception signal, wherein said handover is a handover from mono-static sensing to bi-static sensing or a handover from bi-static sensing to mono-static sensing.

Furthermore, an apparatus for hand-over from a first object sensing device to a second object sensing device is provided comprising: a transmitter configured to: transmit a first pulse train within a pulse repetition interval; transmit a second pulse train within the pulse repetition interval after a predefined time interval of the transmitting of the first pulse train; processing circuitry configured to: detect presence and/or location of a first reception signal and/or of a second reception signal within the pulse repetition interval, wherein the first reception signal and the second reception signal respectively correspond to reflections of the transmitted first pulse train and the second pulse train; and determine whether a handover is to be performed according to the detected presence and/or location of the second reception signal, wherein said handover is a handover from mono-static sensing to bi-static sensing or a handover from bi-static sensing to mono-static sensing.

The above mentioned circuitry may be any circuitry such as processing circuitry including one or more processors and/or other circuitry elements.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

## BRIEF DESCRIPTION OF THE DRAWINGS

The terms Fig., Figs., Figure, and Figures are used interchangeably in the specification to refer to the corresponding figures in the drawings.

An understanding of the nature and advantages of various embodiments may be realized by reference to the following figures.

FIG. 1       is a block diagram illustrating an exemplary communication system.

FIG. 2a      is a block diagram illustrating an exemplary transmitting device employing the procedure for sensing handover of the present disclosure.

FIG. 2b      is block diagram illustrating another exemplary transmitting device employing the procedure for sensing handover of the present disclosure.

FIG. 3       is a schematic drawing illustrating range ambiguity, when an echoes of transmitted pulse trains lie in different pulse repetition intervals.

FIG. 4A      is a schematic drawing illustrating monostatic sensing mode, where a first base station performs monostatic sensing according to the present disclosure.

FIG. 4B      is a schematic drawing illustrating bi-static sensing mode, where a first base station performs transmitting Tx sensing and a second base station performs receiving Rx sensing according to the present disclosure.

FIG. 4C      is a schematic drawing illustrating bi-static sensing in the presence of communication users according to the present disclosure.

FIG. 5       is a system diagram illustrating a Centralized Radio Access Network architecture

FIG. 6       is a schematic drawing illustrating the echoes of the transmitted pulse trains being received in same first pulse repetition interval (unambiguous), while in the following pulse repetition intervals the echo of the first pulse train is unambiguous and the echo of the second pulse train is ambiguous according to the present disclosure.

FIG. 7       is a schematic drawing illustrating pulse trains transmitted in pulse repletion intervals, and both echoes are received within respective pulse repetition interval. Handover is not needed and monostatic sensing mode can be maintained according to the present disclosure.

FIG. 8       is schematic drawing illustrating pulse trains transmitted in pulse repletion intervals, with only the first echo being received in same pule repetition interval while the second echo is not received in same pulse repetition interval. Handover is needed and monostatic sensing mode is changed to bi-static sensing mode according to the present disclosure.

FIG. 9A      is a schematic drawing illustrating various regions of two base stations operating as sensing devices, whose RSSI decays with increasing distance. For an object to be sensed in proximity of the base stations, RSSI is sufficiently large, so that the base station can perform monostatic sensing, according to the present disclosure.

FIG. 9B    is a schematic drawing illustrating of a first and second base station performing bi-static sensing, when an object is located within a handover region. The first base station performs Tx sensing and the second base station performs Rx sensing according to the present disclosure.

FIG. 9C    is a schematic drawing illustrating a first and second base station performing bi-static sensing, when an object is located within a handover region. The first base station performs Rx sensing and the second base station performs Tx sensing according to the present disclosure.

FIG. 10    is a flow diagram illustrating exemplary steps of a handover procedure according to the present disclosure.

FIG. 11    is a block diagram illustrating an exemplary transmitting device performing the handover according to the present disclosure.

FIG. 12    is a flow diagram illustrating exemplary steps of the handover procedure in case if decentralized handover decision making according to the present disclosure.

FIG. 13A    is a system diagram illustrating sensing handover from a monostatic sensing mode to a bi-static sensing mode according to the present disclosure.

FIG. 13B    is a system diagram illustrating sensing handover from a bi-static sensing mode to a monostatic sensing mode according to the present disclosure.

FIG. 13C    is a system diagram illustrating sensing handover from a monostatic sensing mode performed by a first base station to a monostatic sensing mode performed by a second base station, using a bi-static sensing mode according to the present disclosure.

FIG. 13D    is a system diagram illustrating sensing handover from a downlink monostatic sensing mode to a downlink bi-static sensing mode, and changing the bi-static downlink sensing to uplink bi-static sensing using users performing Tx sensing and base stations performing Rx sensing according to the present disclosure.

FIG. 14    is a flow diagram illustrating exemplary steps of the handover procedure in case of centralized handover decision making according to the present disclosure.

FIG. 15A    is a system diagram illustrating a JCAS system architecture operating in a monostatic sensing mode according to the present disclosure.

FIG. 15B    is a system diagram illustrating a JCAS system architecture operating in a bi-static sensing mode according to the present disclosure.

Like reference numbers and symbols in the various figures indicate like elements, in accordance with certain example implementations.

## DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter.

Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to comprise one or more items and may be used interchangeably with "one or more" and "at least one". Furthermore, as used herein, the term "set" is intended to comprise one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

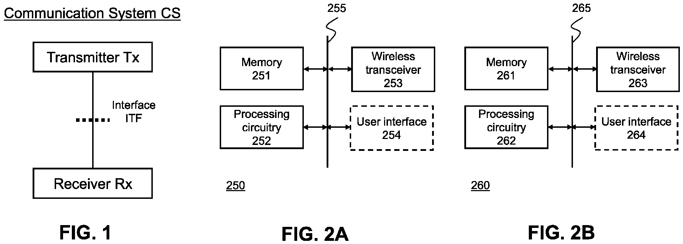

**Fig. 1** illustrates an exemplary communication system CS in which Tx represents a transmitter and Rx represents a receiver. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also comprise the functionality of the Rx and Tx.

The present disclosure is not limited to any particular transmitter Tx, receiver Rx and/or interface ITF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems, such as the recently studied IEEE 802.11 be, and 6G technologies or the like.

Sensing-enabled cellular networks are envisioned to meet the numerous requirements from governments and industries, such as low cost, high precision, hardware equipment, and spectrum resource sharing in 6G networks, but still facing challenges in infrastructure design. Additionally, the possible 6G JCAS network infrastructure is still under discussion and is not decided by networking and telecommunications companies. This is because the integration requires modifications to the network implementation to ensure the effective operation of communication and sensing, without compromising each other. Moreover, the 3rd generation partnership project (3GPP) has recently incorporated a study on JCAS into its work plan for Release 19. According to key performance indicators (KPIs) for sensing requirements in the fifth generation (5G) and beyond, the system must achieve various figures of merits, such as extremely low latency (less than 100 ms), a high confidence level (99% for safety-critical applications and 95% for others), 0.5-meter range resolution for object detection and tracking scenarios, and the like. The sensing functionality (SF) could be positioned closer to the random access network (RAN) node, either by directly connecting with the RAN node or by being embedded within the node. Given the sensing requirements mentioned above, including 5G Ultra Reliable Low Latency Communications (URLLC) demands, designing future joint communications and sensing systems necessitates additional research beyond what has been done so far.

Power allocation for joint communication and sensing in cell-free massive MIMO has been investigated, for example, for a group of access points (APs) that work together to improve their transmit power control, so that the signal-to-interference-plus noise ratio (SINR) is as high as possible, while keeping the communication SINR limits at user terminals. In addition, it was proposed a power allocation optimization method to enhance the sensing detection while satisfying the communication users power (SINR). Joint Processing and Transmission Energy Optimization for ISAC in Cell-Free Massive MIMO with URLLC has been studied, presenting a method for precoding vectors to nullify interference for the UEs, and studying the end-to-end (E2E) energy consumption in a cell-free massive MIMO system with URLLC user equipment (UEs) and multi-static sensing in a cluttered environment. In addition, a joint block length and power control algorithm has been proposed to jointly minimize the energy consumption of both sensing and communication processing and transmission, while simultaneously meeting the sensing requirements, such as detection probability and false alarm with minimum signal-to-interference-plus-noise ratio (SINR) and URLLC requirement. The proposed methods might face challenges in enhancing the received SINR under the assumption of a moving target at different sensing receivers and (JCAS/radar) transmitters, which send signals to the cloud for joint processing. These approaches add a high fronthaul signaling load from centralized sensing operations and network availability. The change in the location of various participating network entities/nodes requires a change in the sensing role of each base station (BS) and user equipment (UE) to maintain the integrity of sensing and communication information while also reducing the load on the central unit.

In Integrated Sensing and Communication for Large Networks using Joint Detection and a Dynamic Transmission Strategy, monostatic detection at the BS is widely used for its simplicity, requiring an antenna array for accurate Direction of Arrival (DoA) estimation and a full-duplex air interface. Bi-static detection increases the area (range) that can be sensed, while reducing self-interference, especially for targets with low reflected energy. The self-interference occurs when the transmitting antenna and the receiving antenna are co-located, which may significantly degrade the system performance of the receiver, in terms of the receiver desensitization, signal masking, or even damage of hardware. In contrast, some works investigate bi-static and mono-static combined approaches to enhance sensing accuracy. For example, a framework for joint bi-static and mono-static detection has been shown to improve the detection performance in certain scenarios, where joint transmission takes place across M slots. High power is used in one slot for sensing, while all M slots are used for communications. In this approach, a radar receiver may be added, which, however, increases the complexity of interference in the low-power slots, affecting the communication users. Moreover, the presented approach does not account for changes in sensing modes from monostatic to bi-static or environmental conditions.

Regarding UAV flight trajectory tracing, the 3GPP standard mentions that, with the development of UAV technologies and the increase in demands for rapid logistics, aerial photography, environmental monitoring, and public security, a variety of commercial UAV services are gradually becoming a reality. One or more network infrastructures may provide the sensing data for the 5G sensing processing unit to gather. When requested, the 5G network operator can provide the Unmanned Aerial Vehicle (UAV) flight trajectory tracking service to a reliable third-party application (such as the USS/UTM, UAV service operator, or UAV management department; USS refers to UAS Service Supplier, UAS refers to Unmanned Aircraft System, and UTM refers to UAS Traffic Management). In UAV flight trajectory tracing where moving targets are detected and tracked, the handover involves switching between multiple BSs of the same or different operators to maintain continuous sensing, given the limited coverage of a single BS. A centralized unit causes latency, which can result in significant communication and sensing delays. Incorporating sensing handover adds further complexity to the network by introducing both self-interference and network-level interference from communication and sensing perspectives.

From a JCAS Network perspective, current work on JCAS-enabled networks explores whether each base station (BS) should manage sensing and communication operations individually or centrally. However, extensive investigations have shown that most current research assumes that the network can constantly communicate and sense. Hence, it does not include network burden or overhead. Sending data from the network edge to a central cloud in a centralized manner may necessitate increased scheduling awareness among all cooperative BSs and user equipment (UE)s.

A joint communication and sensing (JCAS) system promises to improve the efficiency of spectral and hardware resources, enabling a wide range of high accuracy sensing and URLLC applications in 6G networks. To evaluate the sensing and communication performance, a standalone and combined systems are presented in the following.

*A. Communication-only System*

Let $h_{m,k}$ denote the channel coefficient from the k-th BS to the m-th UE. It is assumed that there are K base stations. The BS-UE channel is modeled as a Rician channel with a line-of-sight (LOS). Contrary to a Rayleigh channel where non-LOS path fading is dominant, LOS path fading is dominant in a Rician channel. Fading in a Rician channel typically occurs when one of the paths (e.g. a LOS path or strong reflection signals) is much stronger than the others. The downlink (DL) signal received by the m-th UE from i-th BS can be expressed as follows:

$$y_{m,i}(t) = \sum_{k=1}^{K} h_{m,k} \sqrt{\rho_k} s_k(t) + n_m(t)$$

$$= \underbrace{h_{m,i}\sqrt{\rho_{m,i}}s_{m,i}(t)}_{\text{Desired Signal}} + \underbrace{\sum_{k=1, k\neq i}^{K} h_{m,k}\sqrt{\rho_k}s_k(t)}_{\text{Intrference signal due to other Bs DL}} + \underbrace{g_i\sqrt{\rho_{m,i}}s_{m,i}(t)}_{\text{Intrference signal due to Sensing}} + \underbrace{n_m(t)}_{\text{Noise}}$$

$$(1)$$

where $s_k(t)$ refers to the communication DL transmit signal, based on an orthogonal frequency division multiplexing (OFDM) waveform from the $k$-th BS. Similarly, $s_{m,i}(t)$ denotes DL communication signal transmitted from an i-th BS to an m-th UE. $n_m$ is an additive white Gaussian noise (AWGN) vector with the variance of each entry being $\sigma_m^2$, where $\rho = [\rho_1,...,\rho_K]^T$ is the power vector, $g_i$ is channel gain of the sensing channel, and $\rho_k$ indicates power between the k-th BS and the communicating terminal. Considering the other BS interference, the SINR (relevant for communication "Comm") at the UE can written as:

$$\gamma_{m,i}^{\phantom{m,i}Comm} = \frac{\rho_{m,i}\left|h_{m,i}\right|^2}{\sum_{k=1, k\neq i}^{K} \rho_k \left(\left|h_{m,k}\right|^2\right) + \sigma_m^2}$$

$$(2)$$

*B. Sensing only System*

In the following, the scenario of network sensing is assessed, excluding any UE, where each BSs can perform monostatic and/or bi-static sensing.

In mono-static sensing, one sensing device (e.g. base station) performs both functions of transmitting pulse trains and receiving signals being reflection signals of the transmitted pulse trains that are reflected from an object.

In bi-static sensing, there are at least two sensing devices. A first sensing device performs a function of transmitting the pulse trains, while a second sensing device (e.g. a second base station) receives the above-mentioned reflection signals

**1) Mono-static sensing:** In this case, the received echo from monostatic sensing signal at n-BS is given by:

$$r_{n,n}(t) = \sum_{k=1}^{K} \gamma_{n,k} \sqrt{p_k} s_k(t-\tau) + \beta \sqrt{p_n} s_n(t-\tau)$$

$$= \underbrace{\gamma_{n,n} \sqrt{\rho_n} s_n(t-\tau_{n,n})}_{\text{Desired echo Signal}} + \underbrace{\sum_{k=1,k\neq n}^{K} \gamma_{n,k} \sqrt{\rho_k} s_k(t-\tau)}_{\text{Interference Signal due to other BS echoes}} + \underbrace{\beta \sqrt{\rho_n} s_n(t-\tau)}_{\text{Self-Interfernce}} + \underbrace{w_n(t)}_{\text{Noise}}$$

$$(3)$$

Self-Interference noise where $\gamma_{n,k}$ is a coefficient that represents the effects of the target's radar cross section (RCS) and the signal propagation path loss from the k-th BS to the n-th BS via reflection from the target. $w_n(t)$ is the noise measured at the BS. $\beta_n$ refers to attenuation, and $\tau$ is delay time due to the self-interference (SI). In the *n*-th BS, the sensing SINR is given by:

$$\gamma_{n,n}^{\text{sensing}} = \frac{\rho_n |\gamma_{n,n}|^2}{\sum_{k\neq n}^{K} \rho_k |\gamma_{n,k}|^2 + \rho_n |\beta_n|^2 + \sigma_n^2}$$

$$(4)$$

**2) Bi-static sensing:** In this case, the received echo from bi-static sensing signal at b- BS from n-BS is given by:

$$r_{n,b}(t) = \sum_{k=1}^{K} \gamma_{n,k} \sqrt{p_k} s_k(t-\tau) + \beta \sqrt{p_n} s_n(t-\tau)$$

$$= \underbrace{\gamma_{n,b} \sqrt{\rho_n} s_n(t-\tau_{n,b})}_{\text{Desired echo Signal}} + \underbrace{\sum_{k=1,k\neq b}^{K} \gamma_{n,k} \sqrt{\rho_k} s_k(t-\tau)}_{\text{Interference signal due to undesired BS echoes}} + \underbrace{w_n(t)}_{\text{Noise}}$$

$$(5)$$

*C. JCAS Enabled System*

The received signals are altered by an additional term due to interference from the other service, causing JCAS interference and affecting sensing and communication users' performance. In other words, when services of communication and sensing are executed jointly, a user or a base station or the like receive one signal that entails signal components related to communication (communication service CS) and sensing (sensing service SS). This implies that CS signal components interfere with SS signal components.

1) <u>Communication:</u> For the downlink (DL) signal received by the m-th UE at the t-th time instance, the overall communication can be written as:

$$y_{m,i}(t) = \sum_{k=1}^{K} h_{m,k}\sqrt{\rho_k}s_k(t) + n_m(t)$$

$$= \underbrace{h_{m,i}\sqrt{\rho_{m,i}}s_{m,i}(t)}_{Desired\ Signal} + \underbrace{\sum_{k=1,k\neq i}^{K} h_{m,k}\sqrt{\rho_k}s_k(t)}_{Interference\ signal\ due\ to\ other\ BS\ DL} + \underbrace{\sum_{k=1}^{K}\gamma_{n,k}\sqrt{p_k}s_k(t)}_{Interference\ signal\ due\ to\ Sensing} + \underbrace{n_m(t)}_{Noise} \tag{6}$$

2) <u>Sensing:</u> Following the communication, the overall ("*ov*") received signal by each BS for both monostatic and bistatic sensing system is given by:

**Monostatic system:**

$$r_{n,n}^{ov}(t) = r_{n,n}(t) + \sum_{k=1,k\neq n}^{K} h_{n,k}\sqrt{p_k}s_k(t)$$

$$= \underbrace{\gamma_{n,n}\sqrt{\rho_n}s_n(t-\tau_{n,n})}_{Desired\ echo\ Signal} + \underbrace{\sum_{k=1,k\neq n}^{K}\gamma_{n,k}\sqrt{\rho_k}s_k(t-\tau)}_{Interference\ signal\ due\ to\ other\ BS\ echoes} + \underbrace{\beta\sqrt{\rho_n}s_n(t-\tau)}_{Self-Interfernce} +$$

$$\underbrace{\sum_{k=1,k\neq n}^{K}\sqrt{p_k}h_{n,k}s_k(t)}_{Interference\ signal\ due\ to\ other\ BS\ DL\ signals} + \underbrace{w_n(t)}_{Noise} \tag{7}$$

**Bistatic system:**

$$r_{n,b}^{ov}(t) = r_{n,b}(t) + \sum_{k=1,k\neq b}^{K} h_{nk}\sqrt{p_k}s_k(t)$$

$$= \underbrace{\gamma_{n,b}\sqrt{\rho_n}s_n(t-\tau_{n,b})}_{Desired\ echo\ Signal} + \underbrace{\sum_{k=1,k\neq b}^{K}\gamma_{n,k}\sqrt{\rho_k}s_k(t-\tau)}_{Interference\ signal\ due\ to\ other\ BS\ echoes} +$$

$$\underbrace{\sum_{k=1,k\neq b}^{K}\sqrt{p_k}h_{nk}s_k(t)}_{Interference\ signal\ due\ to\ other\ BS\ DL\ signal} + \underbrace{w_n(t)}_{Noise} \tag{8}$$

where β represents the self-fading channel. In the case of bi-static transmission, n represents the transmitter base station (BS), while b represents the receiver base station (BS). $\gamma_{n,k}$ represents the sensing channel and the path loss, $\tau$ is the time

delay, with $\tau_{n,n} = \cdot\frac{2 \cdot d_1}{c}$ being the delay for monostatic sensing mode and $\tau_{n,b} = \frac{d_1 + d_2}{c}$ being the delay for bi-static sensing mode, $d_i$: distance. c is the speed of light.

When performing JCAS services not only, but in particular in environments of (fast) moving sensing targets, JCAS may no longer be performed in a reliable and robust manner, since sensing targets may move outside the coverage range of the base station that initially transmitted a sensing signal, but did not receive any reflection or received a reflection suggesting that the sensing target is still within an unambiguous range. This is explained further below by various non-limiting examples.

*Example 1: Range Ambiguity:*

In the following, an example of range ambiguity is provided for illustration. Suppose a pulse repetition frequency (PRF) of 10 kHz corresponding to (an inverse of) a pulse repetition period (or pulse repetition interval PRI) of about 0.1 ms. This means that one pulse is transmitted within a period of 0.1 ms. Hence, according to the known radar range formula R = c*PRI/2, the range R = 15km with c = 300,000,000m/s the speed of light (vacuum). Hence, a target within the range of 15km may be unambiguously detected. Assume that a target is at a range of 22km. Then the radar may receive a signal reflected from this target after the radar transmitted meanwhile a pulse in a second period. The radar may erroneously interpret that the 22km-range target is within the 15km range, because the reflected signal lies within the second pulse repetition period and is received after transmitting the second pulse. Therefore, the radar interprets the target's range as within the unambiguous range by subtracting multiples of the unambiguous apparent range of 15km. This may result in inaccurate or wrong range estimation, with possibly severe consequences in JCAS systems used in collision avoidance systems (CAS) or radar-assisted (autonomous) vehicle driving.

*Example 2: Velocity Ambiguity:*

In the following, an example of velocity ambiguity is provided for illustration. Suppose a speed of a to be detected target of 1.5km/s and a PRI of 1ms which translates into an unambiguous range R = 150km. The echo roundtrip time is 2ms. Hence, when the radar transmits a second pulse, the target has moved a distance of about 1.5m. This means that the target is now at a distance of 150.0015m. If the radar assumes the echo is from the second pulse, it might "interpret" is as if the round-trip time was slightly longer, leading to an incorrect velocity calculation. Instead of calculating the correct speed (1.5km/s), the radar could calculate a speed of, for example, 1498.5 m/s, introducing a small but significant error due to the ambiguity.

Ambiguity in range and/or velocity may result in decline of accuracy and thus also reliability of JCAS services. In particular, a device performing sensing and communication may no longer provide monostatic sensing services, where said sensing device functions as transmitter for transmitting the first and second pulse train and detector (e.g. as receiver) to check presence and/or location of respective first and second reception signals. In most cases, the sensing device may no longer operate in a monostatic sensing mode, but still may operate in a bi-static sensing mode, in which case said sensing device may only transmit the first and second pulse train. In turn, the first and second reception signals may be received by another sensing device. It is noted that the range and/or velocity ambiguity becomes of even more of concern, in case of using only a single pulse train, because there is no guarantee of detection ambiguities at all due to a missing echo.

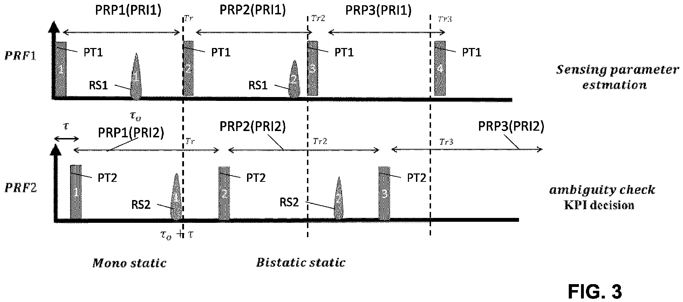

**Fig. 3** illustrates the problem for the example of range ambiguity. First pulse trains may be transmitted at a first pulse repetition frequency PRF1 and second pulse trains may be transmitted at a second pulse repetition frequency PRF2. The second pulse trains may be transmitted after a predefined time interval. In **Fig. 3,** such predefined time interval may be denoted as $\tau$. The first and second pulse trains may be transmitted by a base station (BS), a user equipment (UE), and central network (CN) or the like. The BS, UE, and CN may provide for communication services and/or sensing services separately or jointly (JCAS). The shaded rectangles in Fig. 3 represent a pulse train (PT) and within a pulse repetition interval (PRI), one pulse train may be transmitted. Presuming presence of an object, the transmitted pulse trains may be reflected from the object which may be moving during the pulse train transmission. The shaded lobe (raindrop) shapes in **Fig. 3** represent the reflected signals (RS), which may be received after a time delay $\tau_0$. With the object is more distant to the BS (e.g. by moving away from the BS while transmitting the pulse trains), the reflected signal is received by the BS later than when the object is closer to the BS. In **Fig. 3,** this is reflected in that the received signal (RS1, RS2) appears closer to the end of the PRI in which the pulse trains (PT1, PT2) are transmitted. It is noted that the numbers "1", "2" etc. within the rectangular and raindrop shapes are labels to indicate the sequence number of the pulse / echo repetition. For example, in the rectangles, "1" denotes the first pulse train transmission, "2" denotes the second pulse train transmission; "3" denotes the third pulse train transmission, etc. Similarly, in the raindrops, "1" denotes the first echo (i.e. echo of the first pulse train transmission), "2" denotes the second echo (i.e. echo of the second pulse train transmission); "3" denotes the third echo (i.e. echo of the third pulse train transmission), etc.

As shown in **Fig. 3,** the echo RS2 of the second pulse train PT2 transmitted with PRF2 is received with a delay of $\tau_0 + \tau$. This is still within the first instance PRP1 (denoted first pulse repetition period, PRP) having the length PRI1 (PRI1=1/PRF1), i.e. within the PRP1(PRI1) shown in the figure. Hence, the sensing device may operate in a monostatic mode (i.e. monostatic sensing mode). In this case, no range ambiguity exists. Then the sensing device transmits a first pulse train PT1 in the second PRP (PRP2(PRI1)) and a second pulse train (PT2) in the respective second PRP (PRP2(PRI2)). Assuming that, for example, a to be detected object moves away from the sensing device during the pulse train transmissions, the echo RS1 of the first pulse train PT1 (e.g. first reception signal, rectangle "2") in PRP2(PRI1) is received later than the echo of the first pulse train transmitted in PRP1(PRI1). Still, this echo may be received within PRP2(PRI1), before the first pulse train PT1 (rectangle "3") is transmitted in a next PRP3(PRI1), as shown in **Fig. 3.** However, since the second pulse train PT2 is transmitted after transmitting the first pulse train PT1, the echo of the second pulse train (e.g. second reception signal RS2) may no longer be received within PRP2(PRI1) of the first pulse train. In turn, the second pulse train PT2 may still be received within PRP2(PRI2) of the second pulse train. This means that, from the view of the sensing device, the echo of the second pulse train is received after transmitting the first pulse train in a PRP3(PRI1). As **Fig. 3** shows, the echo RS2 of the second pulse train PT2 (transmitted in PRP2(PRI2)) is received at a time instance that is quite close to and following the time instance at which the first pulse train PT1 has been transmitted in PRP3(PRI1). Therefore, based on the received echo of the second pulse train, the sensing device may determine that the detected object is rather close to it, whereas the echo of the first pulse train received within PRP2(PRI1) indicates that the object is now more distant to the sensing device that before. Thus, even though the sensing device transmits the first and second pulse trains, the detection of the first and second reception signals may no longer be unambiguous regarding the actual distance of the detected object to the sensing device. In this case, the sensing device may no longer provide reliable monostatic sensing services, but may still provide for bi-static sensing services.

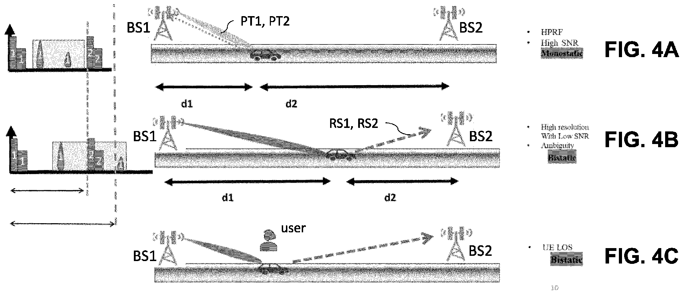

**Fig. 4A and Fig. 4B** depict the above discussed example, where a vehicle (e.g. object to be detected) moves from a first base station BS1 (e.g. first sensing device) toward a second base station BS2 (e.g. second sensing device). To the left, the respective transmitting of the first and second pulse trains (delayed) and the reception of the respective echoes is illustrated, as the vehicle moves from BS1 to BS2. The vehicle has a distance d1 to BS1 and a distance d2 to BS2. In **Fig. 4A,** the (current) distance d1 is smaller than d2, so that the echoes (e.g. reception signals RS1 and RS2) of the first and second transmitted pulse trains PT1 and PT2 are received within the PRI, within which the first and second pulse trains are transmitted. The transmitted pulse trains PT1 and PT2 are represented by the shaded lobe and the respective echoes are represented by a dashed arrow. In this case, BS1 may perform monostatic sensing, without ambiguity in range and/or velocity. The signal to noise ratio (SNR) may be high, meaning being higher than the SNR in a bi-static sensing mode, discussed next. In **Fig. 4B,** the distance d1 is now larger than the distance d2. BS1 may transmit a first and second pulse train. Since d1 is larger than d2 and due to transmitting the second pulse train after transmitting the second pulse train, the echo of the second pulse train is received after transmitting the first and second pule train in a next second PRI2, which the echo of the first pulse train is still received in within PRI1. As discussed above, this may result in range ambiguity. Hence, BS1 may no longer provide for monostatic sensing services, but for bi-static sensing. In this case, BS2 may receive the echoes of the first and second pulse trains, while BS1 transmits said first and second pulse trains. **Fig. 4C** illustrates bi-static sensing in the presence of communication users. It is noted that bi-static radar systems may be preferred due to their ability to provide greater sensing accuracy in cluttered environments. Furthermore, bi-static radar systems are effective in mitigating effects in multipath propagation.

From the above discussed examples, a robust and reliable provision of monostatic sensing services may be difficult and a handover of sensing modes may be needed. However, it remains a challenging task to manage handover between sensing devices.

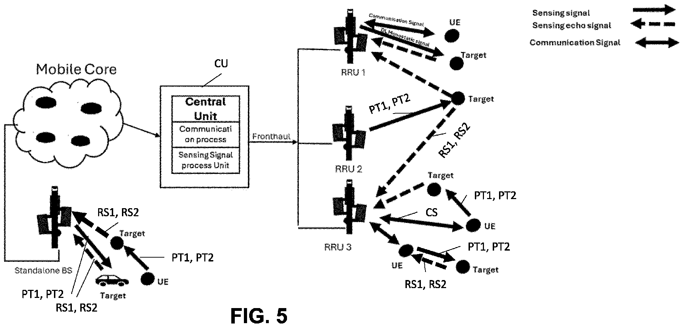

The present disclosure provides a method and apparatus for handover from a first object sensing device to a second object sensing device, exploiting key performance indicators (KPI) such as ambiguity in range and/or velocity, weak echoes, and latency. In other words, the information on ambiguity is exploited to decide whether or not a handover is needed. The present disclosure introduces a mechanism that facilitates transitions between monostatic mode and bistatic sensing mode seamlessly. In this way, requirements for both communication and sensing may be met such as ultra-reliability, low latency, high availability, high data rates, precise synchronization, effective interference management, and efficient resource allocation. It is noted that 5G and 6G JCAS networks can be designed with centralized or decentralized architectures depending on the application requirements. Therefore, the present disclosure enables the use of a smart sensing mode handover mechanism in a JCAS network, regardless of whether the sensing function is part of the core network (centralized) or the edge (access) network (decentralized). Depending on the network setup, there are two exemplary types of architectures in which JCAS can be implemented that is a cloud radio access network (CRAN) and a standalone base station BS, as illustrated in **Fig. 5.**

**Fig. 5** shows an example of a Centralized Radio Access Network architecture, comprising a central unit CU and multiple distributed antenna units called Remote Radio Units (RRUs). These RRUs are connected to the central unit CU through optical fiber links. The central unit is responsible for processing both communication signals (CS) and sensing signals (e.g. transmitted pulse trains PT1 and PT2 and respective reception signals RS1 and RS2) received from the RRUs and UEs (user equipment). While the RRUs can operate cooperatively to enhance communication and sensing, this cooperation may increase transmission power requirements. The RRUs may correspond to base stations or other kind of access points.

A standalone BS can also perform sensing and communication using the received signals either from its own transmitted signals or from UEs or from other BSs (not shown in Fig. 5). A standalone BS may operate in a monostatic sensing mode (i.e. performing Tx sensing by transmitting pulse trains PT1 and PT1 and performing Rx sensing by receiving reception signals RS1 and/or RS2) and in bi-static sensing mode (i.e. Rx sensing or TX sensing). This scenario is referred as decentralized.

The present disclosure may thus provide integrity of a mobile target's sensing information in decentralized sensing with low complexity, and simultaneously minimize the volume of information that the central unit must handle in centralized sensing (reduce overhead). It is noted that the present invention may be employed only in the decentralized architecture or only in the centralized architecture or in an architecture that supports both centralized and decentralized operation (e.g. as shown in Fig. 5).

In the following, an adaptive sensing handover mechanism is detailed that can be used in a JCAS network when sensing function is part of either the core network (centralized) or the edge network (decentralized). The approach of the present disclosure supports the sensing information integrity of a mobile target while also reducing the information that needs to be processed by the central unit in case of centralized sensing. Moreover, this smart adaptive sensing handover mechanism can be applied in a JCAS network where the sensing functionality can be partitioned into a decentralized or a centralized core network. In the case of centralized sensing, this approach reduces the amount of information that needs to be processed by the central unit while also supporting the integrity of the sensing information of a moved target. In the case of decentralized sensing, this approach can improve the sensing accuracy in real time by managing the sensing modes with low complexity.

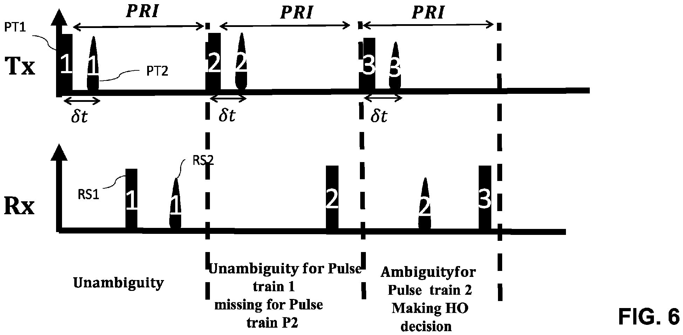

The approach of the present disclosure makes the decision to handover a sensing mode from monostatic to bi-static or from bi-static to monostatic, based on use cases, requirements and sensing KPIs (ambiguity, distance, and resolutions), by transmitting two pulse trains. Handover means a handover from a first object sensing device to a second object sensing device. The first and/or second sensing device may be a base station (BS), a user equipment (UE), or a central network (CN). Said first and/or second sensing device may perform monostatic sensing or bi-static sensing. **Fig. 6** to **Fig. 8** illustrate the determining of whether or not a handover is to be performed, a first pulse train (PT1) may be transmitted within a pulse repetition interval. The pulse repetition interval (PRI) may be also referred to as pulse repetition period (PRP), with said period being a time period (e.g. time interval) between time instances of transmitting said first pulse train.

After a predefined time interval of the transmitting of the first pulse train, a second pulse train (PT2) may be transmitted within the pulse repetition interval. Each of the first pulse train and the second pulse train may comprise one or more pulses. Hence, a pulse train may be viewed as a group of pulses whose individual pulse duration is much smaller than a pulse width of a pulse train. For example, a value of the duration of a pulse train is about 10 $\mu$s, while the pulse width of a single pulse is about 0.5 $\mu$s. However, it is noted that this is only an example and the invention is not limited to these values.

The first pulse train may differ from the second pulse train. For example, the first pulse train and the second pulse train may be differentiated employing techniques of unique coding, modulation time-domain separation, sequence search, separation according to time of arrival (TOA), or histogramming and the like. Unique coding involves assigning a distinct code or sequence to each transmitted pulse. Modulation Time-Domain Separation uses modulation patterns to separate pulses based on their time-domain characteristics. Separating pulses according to TOA uses information on TOA, i.e. information at which time instance the pulse are received allowing radar systems to distinguish between pulses that arrive at different times. In histogramming, each TOA is subtracted from every subsequent TOA and a histogram is made based on each TOA difference. Histogramming involves creating a histogram of the received pulses based on certain parameters, such as amplitude or TOA. In sequence search algorithm, the sequences of identical intervals are extracted from the input pulses. Sequence search involves searching for a specific sequence within the returned signals (e.g. reception signals). This method helps in recognizing pulse patterns that match a pre-determined sequence, aiding in the correct identification of pulse returns. Additionally, identification can be based on Signal-to-Interference-plus-Noise Ratio (SINR) by transmitting pulses with different power levels or modulation techniques. Identification can also be achieved by analyzing the timing of pulse reception, considering the expected intervals between two pulse trains based on the specific application.

The general pulse transmit signal have the following general structure:

$$x(t) = \sum_{l=0}^{L-1} a_l P\left(t - l\tau_{PRI}\right)$$

where, P(t) is the shape of the individual pulse and $\tau_{PRI}$ is the pulse repetition interval. $L$ refers to the total number of pulses

transmitted and $a_i$ is the pulse coefficient. The pulse shape P(t) may be Gaussian, rectangle, triangle etc.

In **Fig. 6,** the predefined time interval is labeled as $\delta t$. The predefined time interval may be set to a value according to an expected amount of movement of detectable objects. Detectable objects include vehicles (e.g. cars, bicycles, motorcylces, vans etc.), persons, animals and the like. The predefined time interval $\delta t$ may be determined based on the application to ensure that the first pulse train does not experience ambiguity before the arrival of the second pulse train. For instance, in applications involving slow-moving or stationary targets, $\delta t$ can be larger. Conversely, for applications involving high-speed motion, $\delta t$ should be smaller to accurately detect small movements or micro-motions. For example, a pedestrian may move at a typical speed of 3m/s corresponding to about 10.8km/h. In turn, a typical speed for a vehicle moving on a highway is about 40m/s corresponding to about 144km/h.

The pulse repetition interval may be determined according to a desired range of detectable objects. It is noted that the pulse repetition interval (i.e. pulse repetition period $T_0$) translates into a pulse repetition frequency. The range of two PRFs can calculated by $f = Lf_{PRF_1}$, where L are relatively prime numbers, and $f_{PRF}$ the selected PRF frequency. In case, the two pulses are designed with a same PRF, the unambiguous ranges R of each of the two pulses is given by:

$$ R = \frac{cT_0}{2} = \frac{c}{2f} $$

where c is the velocity of light and $T_o$ is the train pulse period. For example, in case a rather large detecting range R is desired, the pulse train period T0 may be set to a larger value than in case a lower range is desired. This means that the train pulse period may be set according to the desired range using $T_0 = \frac{2R}{c}$. Two numbers are said to be relatively prime when they have only 1 as the common factor.

As explained further below, the second pulse train enables to discover the range ambiguity, so make us make the hand over decision in efficient way by using said information on ambiguity.

With transmitting the first pulse train and the second pulse train, these pulse trains may imping onto an object, from which the pulse trains are reflected. The object may be moving or non-moving. The pulse trains may be received by the first sensing device which may have transmitted the first and second pulse train. A presence and/or location of a first reception signal (RS1) and/or a second reception signal (RS2) within the pulse repletion interval may be detected. The first and second reception signal correspond to reflections of the transmitted first and second pulse train, respectively. In **Fig. 6,** the respective first reception signal RS1 and second reception signal RS2 are shown on the lower Rx branch with respect to the transmitted first pulse train PR1 and second pulse train PR2 in the upper Tx branch. As shown, the reception signals may be received with a time delay with respect to the time instance at which the first and second pulse train has been transmitted, respectively.

The presence of the first and/or second reception signal may be detected, for example, based on received signal strength indicator (RSSI), channel state information (CSI) or the like. The Location of the first and/or second pulse train means a temporal location. Hence, the presence and/or location of the first and/or second pulse train within the pulse repetition interval may be detected by determining whether or not an RSSI or CSI has a value equal to or larger than a predetermined threshold. Otherwise, the power of the received first and/or second reception signal is too low, and hence is not existent by definition. Alternatively, a first and/or second reception signal may not be received at all. Such case may occur, for example, in case the transmitted first and/or second pulse train is not reflected into the direction of the first sensing device.

As shown in **Fig. 6,** the first reception signal is present within the pulse repetition interval, within which the first pulse train has been transmitted. Hence, the first reception signal is unambiguous. According to the presence and/or location of the first reception signal in the pulse repetition interval, object sensing may be performed including determining sensing parameters. Sensing parameters include received signal strength indicator (RSSI), channel state information (CSI), angle of departure (AoD), angle of Arrival (AoA), delay, Doppler, time of departure (ToD), time of arrival (ToA), time of flight (ToF), phase shift, azimuth of elevation, velocity, etc. used to for object sensing. Hence, sensing parameters are high-resolution parameters, allowing for accurate object sensing.

As noted earlier, using only a single pulse train may not allow determining any ambiguity regarding ranges, velocity or the like. Hence, using a single pulse train does not allow determining whether or not handover is needed. **Fig. 6** shows that the second reception signal may is present, but at different locations regarding the multiple pulse repetition intervals.

According to the detected presence and/or location of the second reception signal, it may be determined whether a handover is to be performed. Said handover is a handover from mono-static sensing to bi-static sensing or a handover from bi-static sensing to mono-static sensing.in the example of **Fig. 6,** said handover is a handover from monostatic sensing to bi-static sensing. Since the second reception signal may be present at a location that may not within the pulse repetition interval in which the second pulse train was transmitted, ambiguity arises. Whether a handover is to be performed is performed may be determined according to the location of the second reception signal in the pulse repetition interval relative to the first reception signal. For example, the second reception signal RS2 may be located after (i.e. temporal later) the first reception signal RS1, with both RS1 and RS1 being detected to be present in the pulse repetition interval (unambiguity), as shown in **Fig. 6.** Hence, it is determined that a handover from monostatic to bi-static is not necessary. In other cases, the second reception signal may not be present in the same pulse repetition interval as of the first reception signal. This is illustrated in **Fig. 6** for the second pulse repetition interval, where the first pulse train is unambiguous since its first reception signal is present in same pulse repetition interval. However, no statement regarding ambiguity for the second pulse train can be made, since the second reception signal is not present in said repetition interval. However, the second reception signal is present in a next pulse repetition interval at a location at which or right after transmitting a (new) first pulse train, but before receiving the first reception signal. This means that the second pulse train is ambiguous. This is because the location of the second reception signal is (temporal) before the second reception signal, even though the second pulse train is transmitted after the predefined time interval of transmitting the first pulse train. Hence, it is determined that a handover from monostatic to bi-static sensing is to be performed. Accordingly, the second pulse train is used for handover decision (basic sensing). It is noted that handover decision should be performed quickly to allow for seamless JCAS. This implies that low complex parameters may be used for handover decision, such as time of arrival (ToA) or the like to determine the temporal location of the reception signals relative to each other and/or relative to the pulse repetition interval.

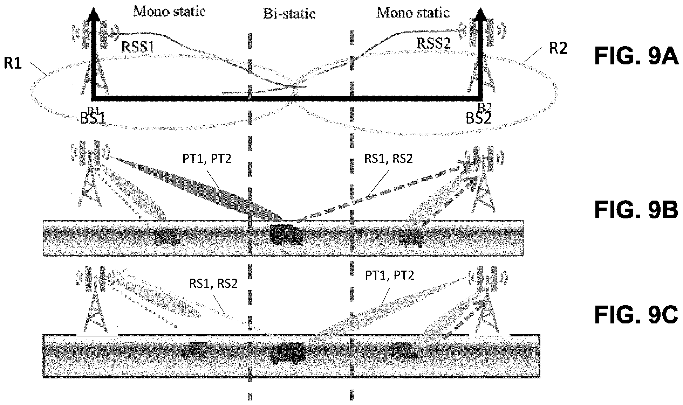

**Fig. 9A to Fig. 9C** illustrate the use of the SINR for the handover decision. SINR accounts for additional interference from communication users, interfering sensing targets, and environmental factors (e.g. fading, shadowing). The SINR of both pulse sets can then be used to initiate the sensing mode handover decision. However, it is noted that the present disclosure is not limited to a specific signal quality measure. **Fig. 9A** shows two base stations BS1 and BS2, whose RSSI 1 and RSS2 decays with increasing distance. Each of BS1 and BS2 have a range R1 and R2 that they can cover with their pulse train. As already discussed, the ranges R1 and R2 can be adapted based on the pulse repetition frequency PRF. In particular, there is a region between BS1 and BS2 where the ranges R1 and R2 may overlap or touch. For an object to be detected within this intermediate region, a bi-static sensing mode is typical, as illustrated in **Fig. 9B** and **Fig. 9C.** For a vehicle located and/or moving within the range R1 or R2, the respective base station BS1 and BS2 perform monostatic sensing. In turn, for the vehicle moving within the intermediate region, the BS1 and BS perform bi-static sensing. This means, depending on for example whether the vehicle moves toward BS1 or BS2, BS1 performs Tx sensing and BS2 performs Rx sensing or BS1 performs Rx sensing and BS2 performs Tx sensing.

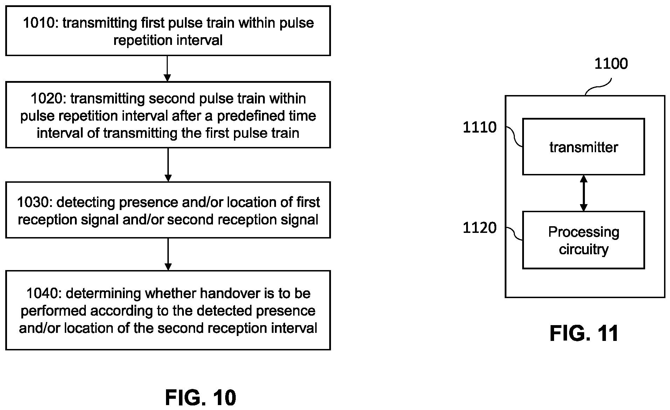

**Fig. 10** shows a flow chart of a method for handover from a first sensing device to a second sensing device, including steps of:

**Step 1010:** transmitting first pulse train within pulse repetition interval.

**Step 1020:** transmitting second pulse train within pulse repetition interval after a predefined time interval of transmitting the first pulse train.

**Step 1030:** detecting presence and/or location of first reception signal and/or second reception signal.

**Step 1040:** determining whether handover is to be performed according to the detected presence and/or location of the second reception interval.

In order to determine whether a handover is to be performed, various parameters may be estimated. For example, any of ambiguity in range of an object being sensed, ambiguity in movement of said object, strength of the second reception signal, and latency of the second reception signal may be estimated, based on the second reception signal. As explained above, ambiguity in range means the sensing device may associate two different distances between the sending device and the detected object based on the second reception signal. The velocity ambiguity relates to that a received echo may be the echo of the first or second pulse train, resulting in different round trip times and hence incorrect velocities. A strength of the second reception signal may be reception signal strength indicator (RSSI), which basically is a measure of the received power. Other quantities that can be suitable for measuring or assessing the quality and characteristics of received signals in radar and communication systems including Channel Quality Indicator (CQI), Signal-to-Interference-plus-Noise Ratio (SINR), Carrier-to-Noise Ratio (CNR). Latency refers to a temporal delay of a signal with respect to a time reference. For example, latency of the second reception signal may be taken with respect to a time at which the first pulse train was transmitted. Alternatively, the latency of the second reception signal may be taken with respect to a time of receiving the first reception signal. These examples are not limiting.

It is noted that different sensing KPIs may be used for sensing handover decision. Besides the above listed quantities, the sensing KPIs may further include any of rich communication services (RCS) reduction (e.g. angle), micro Doppler (classification and regression) or the like. For example, classification involves assigning a specific label to an object or activity by examining the patterns in its (object's) micro-Doppler signature. For example, in surveillance, it may be desirable to classify targets as either humans, vehicles, or animals. Micro-Doppler signatures can be unique for each of these categories: Humans, Vehicles, Animals. For example, in regression, to predict continuous, quantitative values related to an object's motion based on its micro-Doppler signature. In micro-Doppler analysis, regression can be used to predict for instance speed of walking or running, angle of movement, or the like.

Using any of these estimated quantities, a handover decision can be made. When it is determined that the first reception signal is received within the pulse repetition interval and the second reception signal is not received with the pulse repetition interval, it may be determined whether the second reception signal is received after the pulse repetition interval. If it is determined that the second reception signal is received after the pulse repetition interval, it may be determined that a handover is to be performed. As exemplified in, there are three pulse repetition intervals. Referring the second pulse repetition interval to said pulse repetition interval, it can be discerned that the first reception signal is received within the pulse repetition interval. In turn, the second reception signal is not received within the pulse repetition interval, but is received after the pulse repletion interval, namely in the third pulse repetition interval in this example. Therefore, the first reception signal is unambiguous, since the first reception signal is received in the same pulse repetition interval, within which the first pulse train was transmitted. This is not the case for the second reception signal, which is therefore ambiguous. It is noted that the second reception signal may not be received at all. Non-reception may mean that said second reception signal may indeed reach the sensing device that transmitted the pulse trains, but the second reception signal has a power level lower than a power threshold, and hence may not be detected by the sensing device. Alternatively, non-reception may mean that the reception signal is not reflected into the LOS path of the sensing device and the detectable object. Such as case may arise, for example, when the surface of the object has a specific pattern that directs incoming signals (e.g. the second pulse train) into a direction(s) different from the incoming direction of the second pulse train.

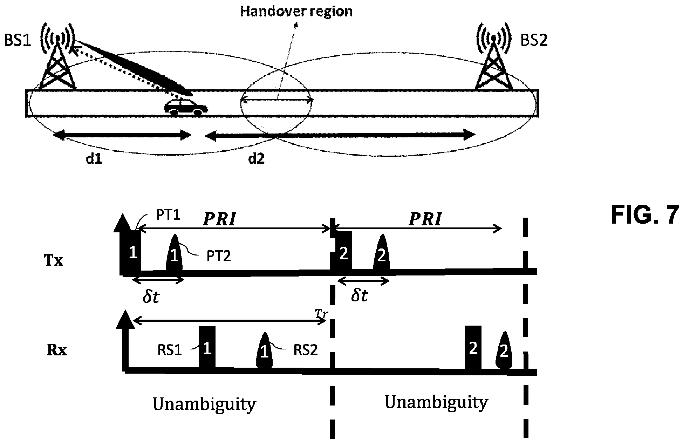

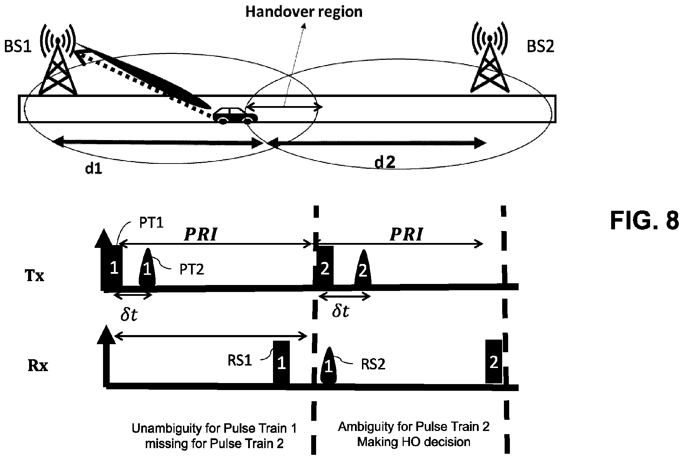

**Fig. 7** and **Fig. 8** illustrate the (non-) handover for the example of monostatic to bi-static handover in relation to distances an object has to a first and second sensing device. The sensing devices may be a first base station BS1 and a second based station BS2, respectively.

**Fig. 7** shows a scenario, where the distance d1 from the object to BS1 is smaller than the distance d2 from the object to BS2. The object may move from BS1 to BS2. Typically, there is a handover region between BS1 and BS2, within which handover may be needed. In this example, there are two pulse repetition intervals. BS1 transmits first pulse train PT1 and second pulse train PT2 within the first PRI. As discussed before, PT2 is transmitted with a predefined time interval denoted as $\delta t$ in **Fig. 7.** Since the object is nearer to BS1 and to BS2, the first and second reception signals RS1 and RS2 are received within the same PRI within which PT1 and PT2 have been transmitted. In particular, the second reception signal is received after receiving the first reception signal. During the PRI, the object may have moved and hence increased its distance d1, which decreasing its distance d2. However, depending on the speed of the object and its initial distance d1, the object may be moved a short distance, such that the object may have not yet approached the handover region. Hence, when BS1 transmits PT1 and PT2 within the second PRI, the reception signals RS1 and RS2 may still be received within the second PRI. However, since d1 has increased, RS1 and RS2 are now located closer to the end of the second PRI. Therefore, the first and second pulse trains are unambiguous, so that a sensing handover from BS1 to BS2 is not needed.

**Fig. 8** shows a scenario, where distance d1 and d2 are similar, and the object has (meanwhile) approached the handover region. BS1 transmits PT1 and PT2 within a first PRI and receives the first reception signal RS1 within the first PRI, but not RS2. Meanwhile, BS1 transmits PT1 and PT2 within a second PRI, and receives RS1 within same second PRI. Moreover, BS1 receives the second reception signal RS2, which originates from PT2 transmitted in the first PRI. Hence, the second pulse train is ambiguous, because the temporal location of BS2 within the second PRI suggests that the object has substantially reduced d1 and is close to BS1. Moreover, considering latency, BS1 may determine that RS2 is received before transmitting PT2 within the second PRI. Hence, BS1 determines that the monostatic sensing is to be handed over to a bi-static sensing. BS2 may then participate in the JCAS in that it receives reception signals RS1 and RS1, while BS1 may continue the transmitting of the pulse trains.

It is noted that the handover from monostatic to bi-static sensing may not be understood as an (temporal) abrupt process, in particular in scenarios with moving objects continuously changing their distances to one or more sensing devices. Accordingly, when it is determined that the second reception signal is received after the pulse repetition interval, the determining whether the first reception signal and/or the second reception signal are received within the pulse repetition interval may be continued until an acknowledgment of the handover from the second object sensing device is received. After reception of said acknowledgement, the handover may be performed. This allows for seamless JCAS, meaning the second object sensing device needs to confirm the handover. The acknowledgment may indicate to the first object sensing device that the second object sensing device is ready for sensing, which is ready for reception of the first and second reception signals and performing handover determination. Before transmitting the acknowledgment to the first object sensing device, the second object sensing device may prepare for receiving reception signals (sensing ready).

The handover control may be performed in a decentralized or centralized way. Before the actual handover, further signaling may be involved that ensures a reliable handover and a seamless continuation of JCAS. In case of centralized sensing, when it is determined that the handover is to be performed, said handover includes transmitting a handover request to a central node that is in communication with the first object sensing device and the second object sensing device, and receiving an acknowledgement of handover from the central node or from the second object sensing device. The central unit may be a central network node that may manage one or more sensing devices (e.g. base stations). The acknowledgement may include an indication of a sensing device to which the sensing is handed over.

When it is determined that a handover is to be performed, a report on the detecting of presence and/or location of the second reception signal within the pulse repetition period may be transmitted to a central unit. The report may include information on the temporal location of the second reception signal relative to the time instance of transmitting the first pulse train and/or the second pulse train, a temporal location of the first pulse train, ambiguity in range of the sensed object, ambiguity of the object movement, strength of the second reception signal, and latency of the second reception signal. Based on the monitored reports, the central unit may decide to which sensing device the sensing handover is to be performed (selection of sensing device). The determining whether a handover is to be performed may be performed based on a command received from the central node. The central unit may analyze the received report and determine whether a handover is needed. Depending on the result of the report analysis, the central unit may transmit to the first sensing device a command (instruction) to perform the handover from the first sensing device to the (selected) second sensing device.

In case of decentralized sensing, when it is determined that the handover is to be performed, a handover request may be transmitted to the second object sensing device and an acknowledgement of handover from the second object sensing device may be received. The acknowledgement of handover may indicate to the first sensing device that the second sensing device is sensing-ready. The first sensing device may then stop determining whether a handover is to be performed. This may include switching a receiver part of the first sensing device into a low-power sleep mode.

Hence, while the handover request may be transmitted to the second sensing device or central unit, it is the (selected) second sensing device that acknowledges the handover.

As detailed above, the handover may be performed in a decentralized and centralized way. In either case, the handover scheme may manage control between the cells to provide a high requirement for both sensing and communications. In the following, process flows are discussed for the decentralized and centralized scenario.

**A. Decentralized:**

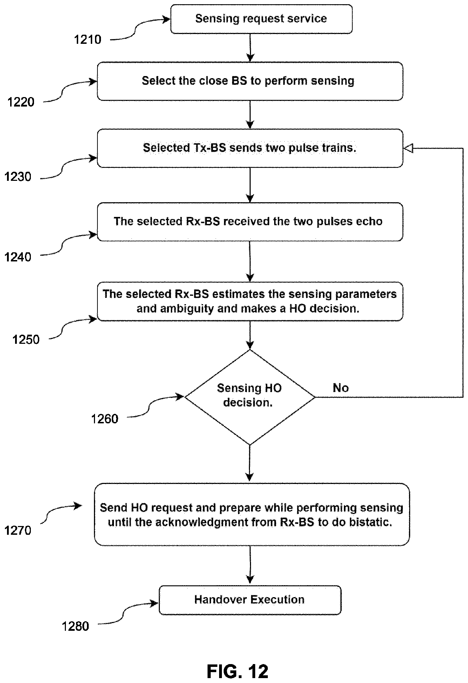

An individual BS can act as the sink node to receive and fuse its own sensing results and those of other BSs. Decentralized sensing handover is illustrated in **FIG. 4A** to **4C,** where first base station BS1 initially performs monostatic sensing (see **Fig. 4A).** A handover from monostatic to bi-static sensing involving a second base station BS2 may be needed dependent on the detected presence and/or location of the first and second reception signal within the pulse repetition interval. Each scenario needs to be continuously supported by sensing services with low sensing latency and resolution. **Fig. 12** shows an exemplary flowchart of the handover approach of the present disclosure in decentralized networks.

**Step 1210, 1220:** A Wireless Service Provider (WSP) operates a cellular network in a designated area, where there is a need to provide sensing service. The scenario involves multiple cooperative Base Stations (BSs) and multiple communication users (e.g. User Equipment, UEs). The WSP may select in which mode the sensing is to be performed, namely, monostatic or bi-static sensing.

Once one of monostatic or bi-static sensing is selected, the WSP may select the respective one or more base stations (sensing devices). The WSP may select one of monostatic or bi-static sensing for example based on the target area and the communication requirements.

The WSP may initially configure the decentralized sensing network by selecting the closest base stations. Said selection may include selecting a first base station functioning as a first sensing device that transmits the pulse trains. In case the WSP initializes the centralized network for monostatic sensing, the WSP would select the same first base station for receiving the reception signals. In case of bi-static sensing, the WSP may initially configure the sensing network by selecting a second base station different from the (selected) first base station for receiving the reception signals and determining whether handover is needed or not. Hence, in decentralized handover, the handover decision may be performed locally, such as by the sensing device that receives the reception signals and detects presence and/or location of said reception signals within the pulse repetition interval.

For example, in step S1210, sensing request may be received at a terminal (e.g. from an application). In step 1220, the closest BS is selected (or the BS with the best reception) for performing the sensing.

**Step 1230:** The selected transmitter BS (may be also denoted as Tx-BS, e.g. BS1) performs a dedicated sensing (beyond communications tasks) by transmitting two pulse trains with two PRFs. The PRFs may be same or different. The first pulse train is used for sensing parameter estimation and the second pulse train for handover decision. More specifically, the received first reception signal related to the first pulse train is used to estimate sensing parameters, including RSSI, AoA, etc. that are suitable for accurate detection of an object. In turn, the second reception signal related to the second pulse train is used to decide on the handover (from bi-static to mono-static or vice versa) .

**Step 1240, 1250 and 1260:** In step 1240, the selected receiving BS (BS-Rx) received the echo signal of the respective first and second pulse trains. This can be BS2 in bi-static scenario or BS1 in mono-static scenario (in which BS-Tx is the same as BS-Rx).

In step 1250, the BS-Rx estimates the sensing parameters based on the first reception signal, and decides in step 1260 whether a sensing mode handover is to be performed. As already discussed, to determine whether a handover is necessary, the BS detects the presence and/or location of the first reception signal and/or the second reception signal within the pulse repetition interval within which the first and second pulse trains have been transmitted. In accordance with the detected presence and/or location of the second reception signal, it is determined whether a handover is needed. For that purpose, the BS estimates based on the second received signal, ambiguity in range of the object being sensed, ambiguity in movement of said object, strength of the second reception signal, and latency of the second reception signal.

If handover is not necessary ("No" in step 1260), the BS remains in the same sensing mode. The method returns to step 1230 of sending the sensing signal including the two pulse trains PT1 and PT2. If handover is needed, the BS will prepare to change the sensing mode from monostatic mode to bi-static mode or vice versa. In case of a handover decision from a monostatic to bi-static mode,

**Step 1270:** Before the handover of the sensing mode is executed, the current receiver BS continues to collect the echo (i.e. the first and second reception) until it receives an acknowledgement from a newly selected BS that said newly selected BS receiver is available to receive (sensing ready). This ensures that the sensing services are continuously provided. The new BS may be BS1 in case of bi-static to mono-static HO and may be BS2 in case of mono-static to bi-static HO.

**Step 1280:** In step 1280 the HO is executed. The transmitter BS performs a dedicated sensing in the new sensing mode while the new BS (receiver) performs the HO determination for the new sensing mode, while satisfying a high capacity and resolution for both communication and sensing.

It is noted that the dedicated signal is a JCAS signal or sensing signal or separate beams for communication and sensing. The approach of the present disclosure considers both communications requirement and sensing, such as resolution, accuracy, static target, moving target.

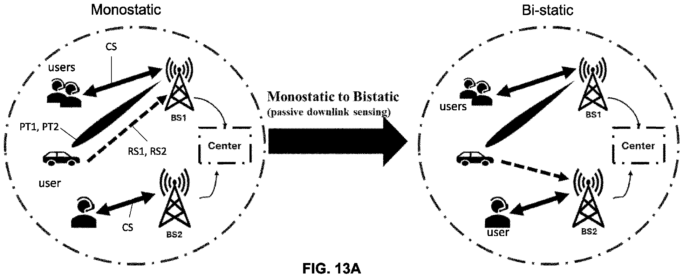

In the following, examples of sensing handover are discussed with reference to **Fig. 13A** to **Fig. 13D** that illustrate handover of a sensing mode in case a sensing device (e.g. base station) make the handover decision (decentralized). A sensing mode may be monostatic or bi-static, and the handover may be from monostatic to bi-static or from bi-static to monostatic.

**Fig. 13A** illustrates sensing handover from a monostatic to a bi-static sensing mode. There are two base stations BS1 and BS2, users and a vehicle that moves toward the region of BS2. The base stations may wireless communicate with a center, such as a center network mode that manages one or more base stations. A base station may provide sensing services represented by the shaded lobe and dashed arrow that refer to pulse trains and their respective reception signals, as discussed before. The base station may further provide communication services represented by the left-right arrow that refers to a communication signal (CS). Initially, BS1 provides JCAS service (communication and sensing). BS1 communicates with one or more users, and transmits a first and second pulse train PT1 and PT2 that are reflected from the vehicle. The reflected signals are received as first and second reception signals RS1 and RS2 by BS 1. In turn, BS2 initially provides only communication services, for example to one user. Since a base station performs the sensing, the respective sensing may be referred to as passive downlink sensing. Unlike in passive sensing, in downlink active sensing, an RRU (or BS) uses the reflected/diffracted signals of its own transmitted downlink communication signals for sensing. This is a typical case considered in systems where the sensing receiver is co-located with the transmitter; it functions like a monostatic radar.

BS1 detects the presence and/or location of the first reception signal and/or the second reception signal within the pulse repetition interval and estimates various quantities such as ambiguity in range of an object being sensed, ambiguity in movement of said object, strength of the second reception signal, and latency of the second reception signal. BS1 then determines, in accordance with the presence and/or location of the second reception signal RS2, whether a handover is needed. With the vehicle meanwhile moving away from BS1 toward BS2, the first base station BS1 determines that a handover is needed. BS1 informs BS2 that a handover to be performed by transmitting a handover request to BS2. BS2 transmits an acknowledgment of the handover to BS1. The BS1 continues to transmit pulse trains PT1 and PT2 and also continues to communicate with the one more users. In turn, after the handover, BS2 receives the first and second reception signals RS1 and RS2 and determines now whether a new handover is needed. BS2 still provides communication services to the user.

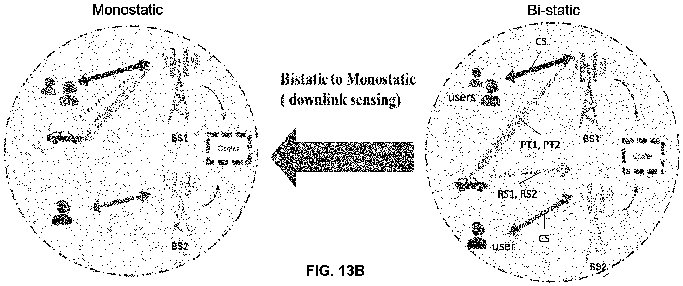

**Fig. 13B** illustrates a scenario similar to **Fig. 13A,** except that the initial sensing mode is bi-static sensing. BS1 and BS2 provide communication services to their user(s). BS1 transmits first and second pulse trains PT1 and PT2 and their reflections are received as first and second reception signals RS1 and RS2 by BS2. BS2 detects the presence and/or location of the first and second reception signal within the pulse repetition interval and determines whether a handover is needed. For example, the vehicle may move away from BS2 toward BS1, so that the strength of the first and second reception signal decrease (e.g. below a predefined threshold). If BS2 determines that a handover is needed, the sensing mode is to be handed over from bi-static to mono-static.

It is noted that the pulse repetition interval (or, correspondingly, the pulse repetition frequency) may be configured in the BS by the BS or by the central unit or by any network entity. It may be configured at the BS2 by BS1.

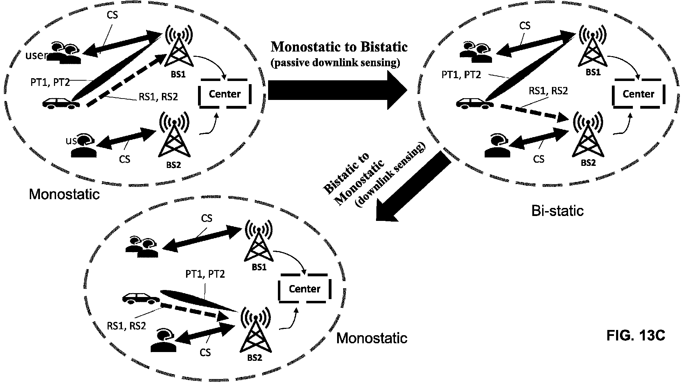

**Fig. 13C** illustrates a scenario that may be viewed as a combination of the scenarios of **Fig. 13A** and **Fig. 13B,** with the handover being from a monostatic mode to another monostatic mode that is mediated by a bi-static sensing mode. Monostatic-Monostatic handover means that before the handover, a first base station performs monostatic sensing and a second base station performs monostatic sensing after the handover. However, such handover may not be abrupt, but rather make use a bi-static mode to allow for a smooth handover transition. As shown in **Fig. 13C,** BS1 initially performs monostatic sensing by transmitting first and second pulse trains and receives echoes of the pulse trains as first and second reception signals. BS1 detects presence and/or location of the first and second reception signal within the pulse repetition interval, and determines whether a handover is needed. If a handover is needed, BS1 transmits a handover request to BS2, which acknowledges the handover to BS1. Even though the vehicle has moved away from BS1 toward BS2, the vehicle may still be within the range of BS1, so that BS1 continues transmitting the pulse trains. In turn, BS2 now performs the processing of the reception signals RS1 and RS2 in detecting the presence and/or location of the first and second reception signals within the pulse repetition interval and determines whether a new handover is needed.

For example, the vehicle may have fully left the range of BS1 and fully entered the range of BS2. This means that, even though BS2 may detect, based on the estimated sensing parameters, that the vehicle is close to BS2, the estimated strength of the reception signals may decay. One reason may be due to the decay of strength of the first and second pulse trains as the distance d1 between BS1 and the vehicle has substantially increases. As a result, the power of the first and second pulse trains incoming onto the vehicle is already low, so that the reflection signals are even lower. BS2 may then decide that a new handover is needed by taking over also the transmission of the pulse trains. BS2 transmits a handover request to BS1 which acknowledges the handover to BS2. In this case, BS1 provides only communication services, while BS2 provides full JCAS service (i.e. transmitting pulse trains and receiving reception signals and processing reception signals).

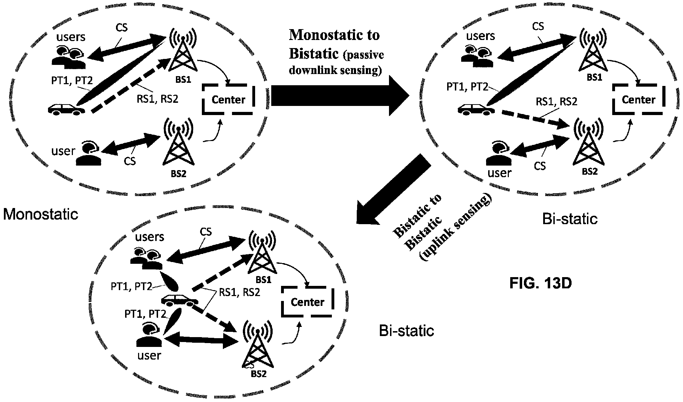

**Fig. 13D** differs from the scenarios of **Fig. 13A** to **Fig. 13C** in that a handover can take place from downlink sensing to uplink sensing, where user(s) or UEs take over sensing services. Initially, BS1 performs monostatic sensing and provides also communication services to its one or more users. BS2 provides only communication services to its user. Shown is a handover from downlink monostatic sensing to bi-static sensing, as described above.

In general, a user Equipment (UE) can utilize uplink (UL) transmission sensing to enhance situational awareness by detecting and monitoring the surrounding environment, with applications in smart homes, and Vehicle-to-Everything (V2X) communication. By integrating communication and sensing into a single transmission, UEs can optimize resource usage and reduce the need for dedicated sensing systems(power efficiency). In V2X, UEs can sense the environment, while communicating with vehicles or infrastructure. Additionally, since the (central) network already has knowledge of the UE's location, it can further refine sensing accuracy and contextual awareness, enhancing the overall system performance. Contextual awareness here refers to a network's ability to use real-time information about the environment, including one or more of user equipment (UE) locations, motion, and surrounding objects, to improve performance for both communication and sensing functions. UEs are equipped with advanced processing capabilities to handle radar(sensing)-like signal processing, especially in ISAC applications. Moreover, the level of sophistication varies depending on the specific use case and the UE's hardware, with some devices being better suited for complex tasks and others offering more basic functionalities. Thus, UEs are suitable to provide sensing services related to the reception processing. However, UE receiving (Rx) for sensing may introduce additional processing complexity, require specialized sensing capabilities, and cause additional latency due to the need for communication with the network center.

With BS1 and BS2 performing bi-static sensing, a handover from bi-static downlink sensing to bi-static uplink sensing may occur in a case, for example, where the strength of the first and second reception signals is low due to the weak power intensity of the pulse trains transmitted by BS1. However, as the vehicle moves, there may be one or more UEs in proximity of the vehicle at a distance that may be at least smaller than the distance d1 between the vehicle and BS1. As noted above, the UE uplink transmission capabilities can be exploited at least for pulse train transmission. Hence, when the BS2 determines that a handover is to be performed for one or more UEs, BS2 may further transmit a handover request to the one or more UEs, each acknowledging the handover. The determination may be performed as described above for one UE. BS2 may further transmit a command to BS1 to switch from transmitting sensing (Tx) to receiving sensing (Rx). The one or more users transmit the first and second pulse train and BS1 and BS2 receive respective reflection signals. Regarding the handover decision, in Figure 13C, for example, initially, during the transition from mono-static to bi-static sensing, the BS1 may perform the decision to initiate handover. However, after the handover from bi-static back to mono-static, it may be BS2. In Figure 13D, after uplink sensing (bistatic to bistatic), the transmitters here are the users, and both BSs receive the sensing signals. The central unit may extract information based on the sensing estimation from both receivers to make a decision. As shown in **Fig. 13D,** the UEs are associated to their respective base station BS1 or BS2. Thus, the BS associated with a respective UE detects presence and/or location of the respective first and second reception signal within the pulse repetition period of said UE. The BS further determines whether a handover is needed. If a handover is needed, the BS may select another UE within a cell served by the BS. Alternatively, the BS may select one or more UEs to increase the contextual awareness.

## B. Centralized:

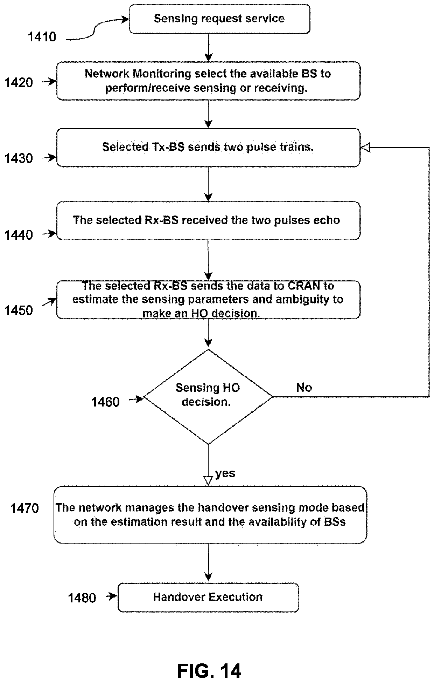

In centralized handover decision, a higher network entity, such as a central node of a network decides on whether a handover is needed. As shown in **Fig. 13A** to **Fig. 13D,** the center represents such central node that communicates with the base stations (sensing devices). **Fig. 14** shows a flowchart of the handover approach of the present disclosure in a centralized architecture.

**Step 1410, 1420:** As in the decentralized architecture, a Wireless Service Provider (WSP) operates a cellular network in a designated area, where there is a need to provide sensing service. The scenario involves central units, wired backhaul link, multiple cooperative base Stations (BSs) and multiple communication users (User Equipment, UEs). The selected transmitter BSs is capable for JCAS operations, either in a centralized or decentralized manner, to optimize resource utilization and performance. The WSP may select in which mode the sensing is to be performed, namely, monostatic or bi-static sensing. Once one of monostatic or bi-static sensing is selected, the WSP may select the respective one or more base stations (sensing devices). The WSP may select one of monostatic or bi-static sensing based on the target area and the communication requirements.

**Step 1430:** The selected transmitter BS (BS1) performs a dedicated sensing by transmitting two pulse trains with two PRFs. The PRFs may be same or different. The first pulse train is used for sensing parameter estimation and the second pulse train for handover decision. More specifically, the received first reception signal related to the first pulse train is used to estimate sensing parameters, including RSSI, AoA, etc. that are suitable for accurate detection of an object. In turn, the second reception signal related to the second pulse train is used to decide on the handover.

**Step 1440, 1450 and 1460:** The selected receiver (e.g. base station BS (BS1 or BS2)) collects the echoes (i.e. the first and second reception signals) and detects the presence and/or location of the first and second reception signal within the pulse repetition interval. However, contrary to the decentralized handover decision, where a receiving base station determines whether a handover is needed, the receiving base station (BS1 in case of monostatic sensing or BS2 in case of bi-static sensing) sends a report on the detection of the presence and/or location of the second reception signal within the pulse repetition period to the central node. The report may include the raw data including reception times of the first and second reception signals, the RSSI of the first and second reception signal. In accordance with the detected presence and/or location of the second reception signal provided in the report, the central node determines whether a handover is needed. For that purpose, the central node estimates based on the second received signal, ambiguity in range of the object being sensed, ambiguity in movement of said object, strength of the second reception signal, and latency of the second reception signal.

If handover is not necessary, the same BS continues with the same sensing mode. For example, the central node may transmit to the BS a flag indicating to continue the same sensing mode. In turn, if a handover is necessary, the central node prepares to transfer sensing modes between monostatic and bi-static modes. Based on decision estimation the CRAN can manage the sensing modes in the network and inform each device (e.g. the base stations performing the sensing) with its role. The central node transmits a command to the receiving BS (BS1 or BS2) to perform the handover. The central node selects a new BS for sensing and informs the new BS to perform sensing. The central node informs further the current receiving BS on the new BS.

**Step 1470:** Before the current receiving BS performs the handover of the sensing mode to the new BS, the current receiver BS continues to collect the echoes (i.e. the first and second reception signals), and transmits a handover request to the central node which acknowledges the handover. The acknowledgement indicates to the current receiving BS that the newly selected BS receiver is available to receive. This is to keep on providing sensing services without discontinuously.

**Step 1480:** The transmitter BS performs a dedicated sensing for the new sensing mode, while the new BS (receiver) performs the handover determination for the new sensing mode, while satisfying a high capacity and resolution for both communication and sensing.

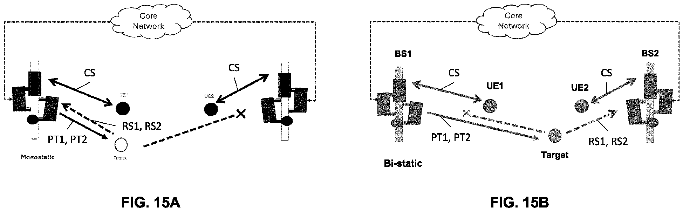

**Fig. 15A** and **Fig. 15B** illustrate a JCAS system architecture operating in a monostatic and bi-static sensing mode. In the exemplary architecture, two base stations BS1 and BS2 communicate with a core network. The core network may manage one or more base stations providing JCAS services and respective reports on detecting the presence and/or location of the second reception signal within the pulse repetition interval. As discussed, such reports may be provided by a base station to the core network (e.g. central unit, central node) in case the core network decides on the handover (centralized handover).

The above described method and exemplary implementations may be executed by a respective apparatus for hand-over from a first object sensing device to a second object sensing device. **Fig. 11** shows an exemplary implementation of such apparatus 1000 that comprises a transmitter 1010 and processing circuitry 1020. The transmitter and processing circuitry may be connected to bi-directionally exchange data (indicated by the bidirectional arrow in **Fig. 11).** The transmitter may transmit a first pulse train within a pulse repetition interval. After a predefined time interval of the transmitting of the first pulse train, the transmitter transmits a second pulse train within the pulse repetition interval. Said pulse train transmission is illustrated in the various figures, including **Fig. 3,** and **Fig. 6** to **Fig. 8,** showing first and second pulse trains PT1 and PT2. As already discussed, the second pulse train has some delay referred to as $\tau_0$ in **Fig. 3** or $\delta t$ in **Fig. 6** to **Fig. 8.Said** delay refers to the predefined time interval. The processing circuitry may detect the presence and/or location of the first reception signal and/or the second reception signal within the pulse repetition interval. In accordance with the detected presence and/or location of the second reception signal, the processing circuitry may determine whether a handover is to be performed. As discussed above, said handover may be from monostatic to bi-static sensing or from bi-static sensing to monostatic sensing. **Fig. 4A** and **Fig. 4B** exemplary depict handover from monostatic sensing of a first base station BS1 to bi-static sensing, where second base station BS2 receives the first and second reception signals RS1 and RS2 and processes the reception signals for the handover decision. The apparatus may be a sensing device itself or may be a handover module implemented as additional unit on a sensing device.

**Fig. 2a** and **Fig. 2b** show exemplary implementations of apparatus 1000 of **Fig. 11** according to some exemplary embodiments, performing functions for handover of the present disclosure as discussed above. Transmitting device 250 in **Fig. 2a** may be a first sensing device and transmitting device 260 in **Fig. 2b** may be a second sensing device.

The transmitting device 250 may be a part of any wireless communication device such as a station (STA) or access point (AP), or, in general base station (BS) or terminal (i.e. user equipment UE). The transmitting device 250 comprises memory 251, processing circuitry 252, and a wireless transceiver 253 (or a wireless transmitter 253), which may be capable of communicating with each other via a bus 255. The transmitting device 250 may further include a user interface 254. However, for some applications, the user interface 254 is not necessary (for instance some devices for machine-to-machine communications or the like). The transmitting device 250 may be the transmitter Tx of the communication system CS in **Fig. 1.**

The memory 251 (also referred to as storage) may store a plurality of firmware or software modules, which implement some embodiments of the present disclosure. The memory may 251 be read from by the processing circuitry 252. Thereby, the processing circuitry may be configured to carry out the firmware/software implementing the embodiments. The processing circuitry 252 may include one or more processors, which, in operation, prepare data for transmission. In particular, the circuitry 252 is configured to map sequential portions of the data onto respective modulation symbols according to a target modulation. In an implementation example, the target modulation is one of phase shift keying, PSK, pulse amplitude modulation, PAM, and quadrature amplitude modulation, QAM, but may not be limited to the target modulations listed. For example, amplitude phase shift keying (ASK) or frequency shift keying (FSK) may be also used to map sequential portions of the data onto respective modulation symbols according to ASK or FSK. A further option is to combine target modulations. As such it is understood, that the above-listed target modulations also cover their respective subsets. PSK, for example, covers BPSK, DPSK, M'ary PSK, QPSK, OQPSK etc.. FSK covers BFSK, M'ary FSK, MSK, GMSK etc.. ASK covers on-off keying, M'ary ASK etc.. QAM is commonly referred to as M'ary QAM covering rectangular QAM or circular QAM. The modulation symbols include a first modulation symbol and a second modulation symbol. In a particular exemplary implementation, BPSK or QPSK are used to generate the modulation symbols. Such lower-order modulations are robust and their application for pairing modulation may provide further improvement as discussed herein.

The wireless transceiver 253 is configured to transmit a signal such as a first pulse train and a second pulse train. The transceiver 253 is configured to receive, for example, the first reception signal and the second reception signal. The wireless transceiver 243 is further configured to transmit a handover request to the transmitting device 260 shown in **Fig. 2b** whose operations are further detailed below. The wireless transceiver 243 is further configured to receive an acknowledgment from the transmitting device 260 and/or the central node. The transmitting device 260 may be the receiver Rx of the communication system CS in **Fig. 1.** Before passing the signal to an analog front including a single or multiple antennas, the transceiver may perform possibly further operations. Such further operations may include an inverse transformation such as the inverse fast Fourier transform (IFFT) or inverse discrete cosine transform (IDCT), in accordance with the desired (orthogonal or non-orthogonal) frequency division multiplex. Moreover, the transformed time-domain symbols may then be modulated onto the actual carrier, amplified or the like.

In an exemplary implementation, the transmitting operation of the transceiver 253 includes further orthogonal frequency division multiplex, OFDM, modulation of the carriers including carriers carrying the symbols of the signal. Alternatively, non-OFDM waveforms may be used for modulating the carriers that carry the respective symbols, which are transmitted using a single antenna. Alternatively, the symbols may be transmitted using multiple antennas.

As **Fig. 2a** shows, the memory 251 may be separated from the processing circuitry 252. However, this is only an example. In general, the memory 251 may be implemented within the processing circuitry 252, and e.g., within the one or more processors. The term "memory" refers to any type of long term, short term, volatile, nonvolatile, or other memory and is not to be limited to any particular type of memory or number of memories, or type of media upon which memory is stored.

The wireless transceiver 253 may operate according some known resource multiplexing and/or multi-user multiplexing scheme. In general, any currently used scheme such as those employed in the IEEE 802.11 framework or in the 5G/6G framework are applicable. In particular, possible examples include the OFDM, OFDMA, or non-orthogonal multiple access (NOMA) or the like.

**Fig. 2b** shows an implementation of transmitting device 260 according to some exemplary embodiments. The transmitting device 260 comprises memory 261, processing circuitry 262, and a wireless transceiver 263 (or a wireless receiver 263), which may be capable of communicating with each other via a bus 265. The receiving device 260 may further include a user interface 265.

However, for some applications, the user interface 265 is not necessary (for instance some devices for machine-to-machine communications or the like).

The memory 261 may store a plurality of firmware or software modules, which implement some embodiments of the present disclosure. The memory may 261 be read from by the processing circuitry 262. Thereby, the processing circuitry may be configured to carry out the firmware/software implementing the embodiments. The processing circuitry 262 may include one or more processors, which, in operation, determines data.

In some embodiments, the processing circuitry 262 performing the functions described herein may be integrated within an integrated circuit on a single chip. The processing circuitry may also implement a control function to control the transceiver 263 to receive the signal. The transceiver 263 is configured (e.g. by the processing circuitry) to receive a signal and obtain symbols carried therein. The transceiver 263 is configured to receive, for example, the first reception signal and the second reception signal. The transceiver 263 is configured to transmit, for example, an acknowledgment for handover to transmitting device 260. For example, the processing circuitry 262 may configure (control) the transceiver 263, over the bus 265, to receive the signal. The transceiver may be, for example, a wireless transceiver obeying some standard or some predefined rules in order to comply with the transmitter, e.g. the one described with reference to **Fig. 2a.**

The transmitting device comprises an antenna array for receiving the signal. The transceiver/receiver 263 is configured to receive the signal (e.g. a handover request) from the communication device such as the transmitting device 250 of **Fig. 2a.** The processing circuitry 262 may include one or more processors, which is/are configured to determine the data from symbols carried by the signal. Thereby, it is assumed that sequential portions of the data are mapped onto respective modulation symbols according to a target modulation. Since transmitting device 260 may be also a sensing device to which a sensing mode may be transferred including bi-static and monostatic sensing, it may perform same or similar functions as transmitting device 250 in **Fig. 2a.**

The present disclosure may be applicable to JCAS systems that may be employed in 5G and beyond, and 6G networks. In particular, the present disclosure for sensing handover addresses problems in JCAS systems, including channel estimation and detection, Multi-cell MIMO including coordinated multi-point (CoMP), Cloud-Radio Access Network (C-RAN), enhanced throughput and reliability mechanisms, efficient precoding design aspects, Joint Radar and Communication (JRC) applications, Massive MIMO-networks, Ultra-Reliable and Low-Latency Communications (URLLC), millimeter-Wave (mmWave) communication, Unmanned Aerial Vehicles-aided communications (UAV), massive Machine-Type Communication (mMTC), Device to Device communication (D2D), Non-Terrestrial Networks (NTN), Link adaption and modulation, Cell- Free, Internet of Things (IoT) (the healthcare programs), Wi-Fi, dynamic vehicular network (Vehicle-to-Vehicle (V2V)), Smart home, pedestrian/animal intrusion detection on a highway, transparent sensing service and so forth.

It is recalled that the term JCAS is only one of terms referencing various projects or proposals that aim at combining communication and sensing functionalities within the same infrastructure or signal design. Some other terms include but are not limited to ISAC (Integrated Sensing and Communication), JSC (Joint Sensing and Communication), Dual-functional Radar and Communication (DFRC), and Coexistent Sensing and Communication. For example, 3rd Generation Partnership Project (3GPP) as well as European Telecommunications Standards Institute (ETSI) have tended to employ the term ISAC. The present disclosure employs there terms interchangeably to denote the effort in integrating communication and sensing functionality into one system.

In summary, the present disclosure provides for techniques and methods to perform hand-over from a first object sensing device to a second object sensing device. The handover is a handover from mono-static sensing to bi-static sensing or a handover from bi-static sensing to mono-static sensing. A first pulse train and a second pulse train are transmitted within a pulse repetition interval, with the second pulse train being transmitted after the transmitting of the first pulse train. A presence and/or a location of a first reception signal and/or of a second reception signal are detected within the pulse repetition interval. The first and the second reception signal respectively correspond to reflections of the transmitted first and second pulse train. According to the detected presence and/or location of the second reception signal, it is determined whether the handover is to be performed.

*Implementations in software and hardware*

It is noted that although embodiments and examples of the present disclosure were provided in terms of an apparatus above, the corresponding method provides the functionality described by the apparatus are also provided.

Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the control device 300 may be stored as one or more instructions or code on a non-transitory computer readable storage medium. The computer-readable media includes physical computer storage media, which may be any available medium that can be accessed by the computer, or, in general by the processing circuitry 320. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

For example, the program code may cause the processing circuitry 261 (e.g. including one or more processors) to operate as a special purpose computer programmed to perform the techniques disclosed herein.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

*Selected embodiments and examples*

According to an aspect, a method is provided for hand-over from a first object sensing device to a second object sensing device comprising steps performed at the first object sensing device of: transmitting a first pulse train within a pulse repetition interval; transmitting a second pulse train within the pulse repetition interval after a predefined time interval of the transmitting of the first pulse train; detecting presence and/or location of a first reception signal and/or a second reception signal within the pulse repetition interval, wherein the first reception signal and the second reception signal respectively correspond to reflections of the transmitted first pulse train and the second pulse train; and determining whether a handover is to be performed according to the detected presence and/or location of the second reception signal, wherein said handover is a handover from mono-static sensing to bi-static sensing or a handover from bi-static sensing to mono-static sensing.

In an exemplary implementation, the method comprises performing of object sensing including determining sensing parameters according to the presence and/or location of the first reception signal in the pulse repetition interval.

According to an exemplary implementation, the determining whether a handover is to be performed is performed according to the location of the second reception signal in the pulse repetition interval relative to the first reception signal.

In a further exemplary implementation, the determining whether a handover is to be performed comprises estimating, based on the second reception signal, any of: ambiguity in range of an object being sensed, ambiguity in movement of said object, strength of the second reception signal, and latency of the second reception signal.

For example, when it is determined that the first reception signal is received within the pulse repetition interval and the second reception signal is not received with the pulse repetition interval: determining whether the second reception signal is received after the pulse repetition interval; and determining that a handover is to be performed, if it is determined that the second reception signal is received after the pulse repetition interval.

In another example, when it is determined that the second reception signal is received after the pulse repetition interval: continuing the determining whether the first reception signal and/or the second reception signal are received within the pulse repetition interval until an acknowledgment of the handover from the second object sensing device is received; and performing the handover after reception of said acknowledgement.

In an exemplary implementation, the method further comprises a step of performing handover when it is determined that the handover is to be performed, wherein the handover includes transmitting a handover request to a central node that is in communication with the first object sensing device and the second object sensing device, and receiving an acknowledgement of handover from the central node or from the second object sensing device.

According to an exemplary implementation, the method further comprises a step of performing handover when it is determined that the handover is to be performed, comprising: transmitting a report on the detecting of presence and/or location of the second reception signal within the pulse repetition period to a central unit, wherein the determining whether a handover is to be performed is performed based on a command received from the central node.

In an exemplary implementation, the method further comprises a step of performing handover when it is determined that the handover is to be performed, wherein the handover includes: transmitting a handover request to the second object sensing device, and receiving an acknowledgement of handover from the second object sensing device.

For example, each of the first pulse train and the second pulse train comprises one or more pulses.

In another example, the first pulse train differs from the second pulse train.

Moreover, the pulse repetition interval is determined according to a desired range of detectable objects.

In an exemplary implementation, the predefined time interval is set to a value according to an expected amount of movement of detectable objects.

According to an aspect, an apparatus is provided for hand-over from a first object sensing device to a second object sensing device comprising: a transmitter configured to: transmit a first pulse train within a pulse repetition interval; transmit a second pulse train within the pulse repetition interval after a predefined time interval of the transmitting of the first pulse train; processing circuitry configured to: detect presence and/or location of a first reception signal and/or of a second reception signal within the pulse repetition interval, wherein the first reception signal and the second reception signal respectively correspond to reflections of the transmitted first pulse train and the second pulse train; and determine whether a handover is to be performed according to the detected presence and/or location of the second reception signal, wherein said handover is a handover from mono-static sensing to bi-static sensing or a handover from bi-static sensing to mono-static sensing.

The examples and exemplary implementations described above for the method apply in the same manner to the apparatus for hand-over. In particular, the processing circuitry may be further configured to perform the steps of one or more of the above-described embodiments, examples, and exemplary implementations.

Still further, a computer program is provided, stored on a non-transitory and computer-readable medium, wherein the computer program includes instructions which when executed on one or more processors perform the steps of the method.

The approach of hand-over of the present disclosure discussed above may provide one or more of the following advantages:

1) The approach of the present disclosure is an essential component for a startup designing an effective 5G and beyond network for the JCAS system. It may provide a low-complexity solution with high sensing resolution and accuracy, making it suitable for future JCAS networks for both communication and sensing.

2) Implementing the approach of the present disclosure enhances the sensing accuracy/resolution in decentralized networks architectures by controlling the cooperative multi transmitter nodes. Individual BSs need to coordinate their activities to meet the design objectives of the entire system.

3) The approach of the present disclosure supports the sensing information integrity of a moved target and reduces the information that needs to be processed by the central unit in the case of centralized sensing.

4) Implementing the approach of the present disclosure in a CRAN-type network can reduce costs. These systems often incur high expenses due to computational demands, communication overhead, and the requirements of URLLC, and massive machine type communications (mMTC). Leveraging a CRAN architecture significantly reduces the overall cost.

5) The approach of the present disclosure may provide flexibility in sensing. A centralized/decentralized approach (like a smart adaptive approach) provides control for decentralized networks architecture, and assists for centralized network architecture. Moreover, the approach of the present disclosure can support sensing applications that demand for low latency and real-time support, where the sensing function (SF) can be placed for the core network in a centralized sensing architecture or a decentralized one.

Finally, in the 6G JCAS networks, the role of participating network nodes may change based on the location of targets and users to provide accurate sensing with less overhead while maintaining the desired communication performance in terms of throughput, latency, and reliability.

According to some embodiments, the processing circuitry and/or the transceiver is embedded in an integrated circuit, IC.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims.

For example, it is to be understood that the presently disclosed subject matter contemplates that, to the extent possible, one or more features of any embodiment can be combined with one or more features of any other embodiment.

**Claims**

1. A method for hand-over from a first object sensing device to a second object sensing device comprising steps performed at the first object sensing device of:

   transmitting a first pulse train within a pulse repetition interval;
   transmitting a second pulse train within the pulse repetition interval after a predefined time interval of the transmitting of the first pulse train;
   detecting presence and/or location of a first reception signal and/or a second reception signal within the pulse repetition interval, wherein the first reception signal and the second reception signal respectively correspond to reflections of the transmitted first pulse train and the second pulse train; and
   determining whether a handover is to be performed according to the detected presence and/or location of the second reception signal, wherein said handover is a handover from mono-static sensing to bi-static sensing or a handover from bi-static sensing to mono-static sensing.

2. The method according to claim 1, comprising performing of object sensing including determining sensing parameters according to the presence and/or location of the first reception signal in the pulse repetition interval.

3. The method according to claim 1 or 2, wherein the determining whether a handover is to be performed is performed according to the location of the second reception signal in the pulse repetition interval relative to the first reception signal.

4. The method according to any of claims 1 to 3, wherein the determining whether a handover is to be performed comprises estimating, based on the second reception signal, any of:

   - ambiguity in range of an object being sensed,
   - ambiguity in movement of said object,
   - strength of the second reception signal, and
   - latency of the second reception signal.

5. The method according to any of claims 1 to 4, wherein
   when it is determined that the first reception signal is received within the pulse repetition interval and the second reception signal is not received with the pulse repetition interval:

   - determining whether the second reception signal is received after the pulse repetition interval; and
   - determining that a handover is to be performed, if it is determined that the second reception signal is received after the pulse repetition interval.

6. The method according to claim 5 further including:
   when it is determined that the second reception signal is received after the pulse repetition interval:

   - continuing the determining whether the first reception signal and/or the second reception signal are received within the pulse repetition interval until an acknowledgment of the handover from the second object sensing device is received; and
   - performing the handover after reception of said acknowledgement.

7. The method according to any of claims 1 to 6,

   further comprising a step of performing handover when it is determined that the handover is to be performed, wherein the handover includes

   - transmitting a handover request to a central node that is in communication with the first object sensing device and the second object sensing device, and
   - receiving an acknowledgement of handover from the central node or from the second object sensing device.

8. The method according to any of claims 1 to 6, further comprising a step of performing handover when it is determined that the handover is to be performed, comprising:

transmitting a report on the detecting of presence and/or location of the second reception signal within the pulse repetition period to a central unit,
wherein the determining whether a handover is to be performed is performed based on a command received from the central node.

9. The method according to any of claims 1 to 6, further comprising a step of performing handover when it is determined that the handover is to be performed, wherein the handover includes:
transmitting a handover request to the second object sensing device, and receiving an acknowledgement of handover from the second object sensing device.

10. The method according to any of claims 1 to 9, wherein each of the first pulse train and the second pulse train comprises one or more pulses.

11. The method according to any of claims 1 to 9, wherein the first pulse train differs from the second pulse train.

12. The method according to any of the preceding claims, wherein the pulse repetition interval is determined according to a desired range of detectable objects.

13. The method according to any of the preceding claims, wherein the predefined time interval is set to a value according to an expected amount of movement of detectable objects.

14. A computer program stored on a non-transitory and computer readable medium, wherein the computer program includes instructions which when executed on one or more processors perform the method according to any of claims 1 to 13.

15. An apparatus for hand-over from a first object sensing device to a second object sensing device comprising:

a transmitter configured to:

- transmit a first pulse train within a pulse repetition interval;
- transmit a second pulse train within the pulse repetition interval after a predefined time interval of the transmitting of the first pulse train;

processing circuitry configured to:

- detect presence and/or location of a first reception signal and/or of a second reception signal within the pulse repetition interval, wherein the first reception signal and the second reception signal respectively correspond to reflections of the transmitted first pulse train and the second pulse train; and
- determine whether a handover is to be performed according to the detected presence and/or location of the second reception signal, wherein said handover is a handover from mono-static sensing to bi-static sensing or a handover from bi-static sensing to mono-static sensing.

Communication System CS

| Transmitter Tx |
| :---: |

Interface
ITF

| Receiver Rx |
| :---: |

**FIG. 1**

255

| Memory 251 | | Wireless transceiver 253 |
| :---: | :---: | :---: |

| Processing circuitry 252 | | User interface 254 |
| :---: | :---: | :---: |

250

**FIG. 2A**

265

| Memory 261 | | Wireless transceiver 263 |
| :---: | :---: | :---: |

| Processing circuitry 262 | | User interface 264 |
| :---: | :---: | :---: |

260

**FIG. 2B**

FIG. 3

EP 4 741 869 A1

FIG. 4A

FIG. 4B

FIG. 4C

FIG. 5

**FIG. 6**

FIG. 7

Handover region

BS1    BS2

d1    d2

FIG. 8

Tx

PT1   *PRI*   *PRI*

PT2

$\delta t$   $\delta t$

Rx

RS1   RS2

Unambiguity for Pulse Train 1   Ambiguity for Pulse Train 2
missing for Pulse Train 2   Making HO decision

FIG. 9A

FIG. 9B

FIG. 9C

1010: transmitting first pulse train within pulse repetition interval

1020: transmitting second pulse train within pulse repetition interval after a predefined time interval of transmitting the first pulse train

1030: detecting presence and/or location of first reception signal and/or second reception signal

1040: determining whether handover is to be performed according to the detected presence and/or location of the second reception interval

**FIG. 10**

1100

1110 transmitter

1120 Processing circuitry

**FIG. 11**

EP 4 741 869 A1

```
                          ┌─────────────────────────────┐
          1210 ──────────▶│    Sensing request service  │
                          └─────────────────────────────┘
                                        │
                                        ▼
                          ┌─────────────────────────────┐
                     ────▶│ Select the close BS to perform sensing │
          1220            └─────────────────────────────┘
                                        │
                                        ▼
                          ┌─────────────────────────────┐
                     ────▶│ Selected Tx-BS sends two pulse trains. │◀────┐
          1230            └─────────────────────────────┘              │
                                        │                              │
                                        ▼                              │
                          ┌─────────────────────────────┐              │
                     ────▶│ The selected Rx-BS received the two pulses echo │  │
          1240            └─────────────────────────────┘              │
                                        │                              │
                                        ▼                              │
                          ┌─────────────────────────────┐              │
                     ────▶│ The selected Rx-BS estimates the sensing parameters │ │
                          │   and ambiguity and makes a HO decision.    │     │
          1250            └─────────────────────────────┘              │
                                        │                              │
                                        ▼                              │
                                   ╱─────────╲                         │
                                  ╱  Sensing HO ╲     No               │
          1260  ───────────────▶ ╲  decision.  ╱ ─────────────────────┘
                                   ╲─────────╱
                                        │
                                        ▼
                          ┌─────────────────────────────┐
                     ────▶│ Send HO request and prepare while performing sensing │
                          │ until the acknowledgment from Rx-BS to do bistatic.  │
          1270            └─────────────────────────────┘
                                        │
                                        ▼
                          ┌─────────────────────────────┐
                     ────▶│     Handover Execution       │
          1280            └─────────────────────────────┘
```

FIG. 12

**Monostatic**

**Bi-static**

FIG. 13A

Monostatic

Bi-static

Bistatic to Monostatic
( downlink sensing)

FIG. 13B

FIG. 13C

**Monostatic to Bistatic** (passive downlink sensing)

*Bistatic to Bistatic (uplink sensing)*

Monostatic

Bi-static

Bi-static

**FIG. 13D**

1410 → Sensing request service

1420 → Network Monitoring select the available BS to perform/receive sensing or receiving.

1430 → Selected Tx-BS sends two pulse trains.

1440 → The selected Rx-BS received the two pulses echo

1450 → The selected Rx-BS sends the data to CRAN to estimate the sensing parameters and ambiguity to make an HO decision.

1460 → Sensing HO decision.    No

1470 → The network manages the handover sensing mode based on the estimation result and the availability of BSs

yes

1480 → Handover Execution

**FIG. 14**

**FIG. 15A**

**FIG. 15B**

Europäisches
Patentamt

European
Patent Office

Office européen
des brevets

# EUROPEAN SEARCH REPORT

**Application Number**

EP 24 21 1825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/314584 A1 (GUMMADI BAPINEEDU CHOWDARY [IN] ET AL) 5 October 2023 (2023-10-05) * paragraph [0096] * * paragraph [0099] * * paragraph [0104] - paragraph [0110] * * paragraph [0114] - paragraph [0115] * * paragraph [0118] - paragraph [0125] * * figures 1-9 * ----- | 1-15 | INV. G01S7/00 G01S7/292 G01S13/00 G01S13/22 G01S13/30 G01S13/87 H04W36/08 H04W72/542 |
| Y | EP 0 060 323 A1 (SIEMENS AG [DE]) 22 September 1982 (1982-09-22) * page 3, line 22 - page 4, line 16 * * page 6, line 18 - page 7, line 4 * * figures 1-5 * ----- | 1-15 | |
| A | GB 932 294 A (REEVES INSTRUMENT CORP) 24 July 1963 (1963-07-24) * page 3, line 70 - line 76 * * figures 1-7 * ----- | 1-15 | |
| A | US 4 714 927 A (SIEGEL HARALD [DE] ET AL) 22 December 1987 (1987-12-22) * column 3, line 57 - column 5, line 14 * * figures 1-7 * ----- | 1-15 | **TECHNICAL FIELDS SEARCHED (IPC)** G01S H04W |

The present search report has been drawn up for all claims

| Place of search | Date of completion of the search | Examiner |
|---|---|---|
| Munich | 28 March 2025 | Köppe, Maro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 1825

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | | | Publication date | Patent family member(s) | | Publication date |
|---|---|---|---|---|---|---|
| US 2023314584 | A1 | | 05-10-2023 | CN | 118871812 A | 29-10-2024 |
| | | | | EP | 4505216 A1 | 12-02-2025 |
| | | | | KR | 20250005077 A | 09-01-2025 |
| | | | | TW | 202341765 A | 16-10-2023 |
| | | | | US | 2023314584 A1 | 05-10-2023 |
| | | | | WO | 2023196704 A1 | 12-10-2023 |
| EP 0060323 | A1 | | 22-09-1982 | DE | 3110279 A1 | 30-09-1982 |
| | | | | EP | 0060323 A1 | 22-09-1982 |
| GB 932294 | A | | 24-07-1963 | NONE | | |
| US 4714927 | A | | 22-12-1987 | DE | 3321263 A1 | 13-12-1984 |
| | | | | EP | 0128543 A1 | 19-12-1984 |
| | | | | US | 4714927 A | 22-12-1987 |

EPO FORM P0459